# EUROPEAN PATENT SPECIFICATION

(11) **EP 0 707 106 B1**
(45) Date of publication and mention of the grant of the patent: **27.03.2002**
(21) Application number: 95111421.4
(22) Date of filing: 19.07.1995
(51) Int. Cl.: D04H 13/00

(54) **Composite elastic necked-bonded material**
Elastisches, eingeschnürt gebundenes Verbundmaterial
Matériau composite élastique unit par étranglement

(30) Priority: 19.07.1994 US 276924
(43) Date of publication of application: 17.04.1996
(73) Proprietor: KIMBERLY-CLARK WORLDWIDE, INC., Neenah, Wisconsin 54956 (US)
(72) Inventor: Haffner, William Bela, Kennesaw, Georgia 30144 (US); Morman, Michael Tod, Alpharetta, Georgia 30201 (US); Taylor, Jack Draper, Roswell, Georgia 30076 (US); Tinsley, Jon Edward, Roswell, Georgia 30076 (US)
(74) Representative: DIEHL GLAESER HILTL & PARTNER

(56) References cited:
- WO-A-80/00676
- WO-A-90/03464
- WO-A-92/16366

## Description

The present invention relates to a method of producing a composite elastic material. Generally speaking, the present invention relates to such a method wherein the composite elastic material includes a tensioned, necked material.

Plastic nonwoven webs formed by nonwoven. extrusion processes such as, for example, meltblowing processes and spunbonding processes may be manufactured into products and components of products so inexpensively that the products could be viewed as disposable after only one or a few uses. Representatives of such products include diapers, tissues, wipes, garments, mattress pads and feminine care products.

Some of the problems in this area are the provision of an elastic material which is resilient and flexible while still having a pleasing feel. One problem is the provision of an elastic material which does not feel plastic or rubbery. The properties of the elastic materials can be improved by forming a laminate of an elastic material with one or more nonelastic material on the outer surface which provide better tactile properties.

Nonwoven webs formed from nonelastic polymers such as, for example, polypropylene are generally considered nonelastic. The lack of elasticity usually restricts these nonwoven web materials to applications where elasticity is not required or desirable.

Composite materials of elastic and nonelastic material have been made by bonding the nonelastic material to the elastic material in a manner that allows the entire composite material to stretch or elongate so they can be used in garment materials, pads, diapers and feminine care products.

In one such composite material, a nonelastic material is joined to an elastic material while the elastic material is in a stretched condition so that when the elastic material is relaxed, the nonelastic material gathers between the locations where it is bonded to the elastic material. The resulting composite elastic material is stretchable to the extent that the nonelastic material gathered between the bond locations allows the elastic material to elongate. An example of this type of composite material is disclosed, for example, by U.S. Patent No. 4,720,415 to Vander Wielen et al., issued January 19, 1988.

From Patent WO 90/03464 a composite elastic necked-bonded material including at least one necked material joined to at least one elastic sheet is known. The composite elastic necked-bonded material is stretchable in a direction parallel to the direction of necking of the necked material. Methods of producing a composite elastic necked-bonded material are illustrated.

The term "elastic" is used herein to mean any material which, upon application of a biasing force, is stretchable, that is, elongatable, to a stretched, biased length which is at least about 160 percent of its relaxed unbiased length, and which, will recover at least 55 percent of its elongation upon release of the stretching, elongating force. A hypothetical example would be a 2.54 cm (1 inch) sample of a material which is elongatable to at least 4.064 cm (1.60 inches) and which, upon being elongated to 4.064 cm (1.60 inches) and released, will recover to a length of not more than 3.226 cm (1.27 inches). Many elastic materials may be stretched by much more than 60 percent of their relaxed length, for example, 100 percent or more, and many of these will recover to substantially their original relaxed length, for example, to within 105 percent of their original relaxed length, upon release of the stretching force.

As used herein, the term "nonelastic" refers to any material which does not fall within the definition of "elastic," above.

As used herein, the term "recover" refers to a contraction of a stretched material upon termination of a biasing force following stretching of the material by application of the biasing force. For example, if a material having a relaxed, unbiased length of 2.54 cm (one (1) inch) is elongated 50 percent by stretching to a length of 3.81 cm (one and one half (1.5) inches) the material would be elongated 50 percent (1.27 cm=0.5 inch) and would have a stretched length that is 150 percent of its relaxed length. If this exemplary stretched material contracted, that is recovered to a length of 2.794 cm (one and one tenth (1.1) inches) after release of the biasing and stretching force, the material would have recovered 80 percent (1.016 cm) (0.4 inch) of its 1.27 cm (one-half (0.5) inch) elongation. Recovery may be expressed as [(maximum stretch length - final sample length)/(maximum stretch length - initial sample length)] X 100.

As used herein, the term "nonwoven web" means a web that has a structure of individual fibers or threads which are interlaid, but not in an identifiable, repeating manner. Nonwoven webs have been, in the past, formed by a variety of processes such as, for example, meltblowing processes, spunbonding processes and bonded carded web processes.

As used herein, the term "microfibers" means small diameter fibers having an average diameter not greater than about 100 µm, for example, having a diameter of from about 0.5 µm to about 50 µm, more particularly, microfibers may have an average diameter of from about 4 µm to about 40 µm.

As used herein, the term "meltblown fibers" means fibers formed by extruding a molten thermoplastic material through a plurality of fine, usually circular, die capillaries as molten threads or filaments into a high velocity gas (e.g. air) stream which attenuates the filaments of molten thermoplastic material to reduce their diameter, which may be to microfiber diameter. Thereafter, the meltblown fibers are carried by the high velocity gas stream and are deposited on a collecting surface to form a web of randomly disbursed meltblown fibers. Such a process is disclosed, for example, in U.S. Patent No. 3,849,241 to Butin, the disclosure of which is hereby incorporated by reference.

As used herein, the term "spunbonded fibers" refers to small diameter fibers which are formed by extruding a molten thermoplastic material as filaments from a plurality of fine, usually circular, capillaries of a spinnerette with the diameter of the extruded filaments then being rapidly reduced as by, for example, eductive drawing or other well-known spunbonding mechanisms. The production of spunbonded nonwoven webs is illustrated in patents such as, for example, in U.S. Patent No. 4,340,563 to Appel et al., and U.S. Patent No. 3,692,618 to Dorschner et al. The disclosures of both these patents are hereby incorporated by reference.

As used herein, the term "interfiber bonding" means bonding produced by entanglement between individual fibers to form a coherent web structure without the use of thermal bonding. This fiber entangling is inherent in the meltblown processes but may be generated or increased by processes such as, for example, hydraulic entangling or needlepunching. Alternatively and/or additionally, a bonding agent can be utilized to increase the desired bonding and to maintain structural coherency of a fibrous web. For example, powdered bonding agents and chemical solvent bonding may be used.

As used herein, the term "sheet" means a layer which may either be a film or a nonwoven web.

As used herein, the term "necked material" refers to any material which has been narrowed in at least one dimension by application of a tensioning force.

As used herein, the term "neckable material" means any material which can be necked.

As used herein, the term "percent neckdown" refers to the ratio determined by measuring the difference between the un-necked dimension and the necked dimension of the neckable material and then dividing that difference by the un-necked dimension of the neckable material.

As used herein, the term "composite elastic necked-bonded material" refers to a material having an elastic sheet joined to a necked material at least at two places. The elastic sheet may be joined to the necked material at intermittent points or may be completely bonded thereto. The joining is accomplished while the elastic sheet and the necked material are in juxtaposed configuration. The composite elastic necked-bonded material is elastic in a direction generally parallel to the direction of neckdown of the necked material and may be stretched in that direction to the breaking point of the necked material. A composite elastic necked-bonded material may include more than two layers. For example, the elastic sheet may have necked material joined to both of its sides so that a three-layer composite elastic necked-bonded material is formed having a structure of necked material/elastic sheet/necked material. Additional elastic sheets and/or necked material layers may be added. Yet other combinations of elastic sheets and necked materials may be used.

As used herein, the term "palindromic laminate" means a multilayer laminate, for example, a composite elastic necked-bonded material which is substantially symmetrical. Exemplary palindromic laminates would have layer configurations of A/B/A, A/B/B/A, A/A/B/B/A/A, etc. Exemplary non-palindromic laminates would have layer configurations of A/B/C, A/B/C/A, A/C/B/D, etc.

As used herein, the term "polymer" generally includes, but is not limited to, homopolymers, copolymers, such as, for example, block, graft, random and alternating copolymers, terpolymers, etc. and blends and modifications thereof. Furthermore, unless otherwise specifically limited, the term "polymer" shall include all possible geometrical configurations of the material. These configurations include, but are not limited to, isotactic, syndiotactic and random symmetries.

As used herein, the term "consisting essentially of" does not exclude the presence of additional materials which do not significantly affect the desired characteristics of a given composition or product. Exemplary materials of this sort would include, without limitation, pigments, antioxidants, stabilizers, surfactants, waxes, flow promoters, solvents, particulates and materials added to enhance processability of the composition.

It is an object of the present invention to overcome the above mentioned problems. This object is solved by the method of producing a composite elastic necked-bonded material according to independent claim 1. Further advantageous features, details, and aspects of the invention are evident from the dependent claims, the description and the drawings

In accordance with the present invention, there is provided a method of producing a composite elastic necked bonded material comprising:
providing a tensioned, necked material;
providing a film of substantially molten elastomer;
depositing the elastomeric film onto the tensioned, necked material to form a multilayer material; and
applying pressure to the multilayer material to bond the tensioned, necked material to the elastomeric film; and
utilizing a pressure roll arrangement comprising at least a first roll and second roll wherein said first and said second roll are arranged so that a controlled gap having a width of between 0,38 mm (15 mils) and 3,18 mm (125 mils) exists between said first roll and said second roll, said pressure roll arrangement applying pressure to the multilayer material to bond the tensioned, necked material to the elastomeric film.

When an elastic sheet is formed directly on the necked material utilizing film extrusion processes, the method of the present invention may include the following steps: 1) providing a continuously advancing tensioned, necked material; 2) extruding a film of substantially molten elastomer through a die tip; 3) depositing the extruded elastomeric film onto the tensioned, necked material within from about 0.1 to about 1 second of exiting the die tip to form a multilayer material; and 4) immediately applying pressure to the multilayer material to bond the tensioned, necked material to the elastomeric film.

Generally speaking, the tensioned, necked material may be material that was pre-necked and treated to remain in its necked condition (e.g., a reversibly necked material) or may be provided by applying a tensioning force to at least one neckable material to neck the material.

According to the invention, the film of elastomer may be deposited onto the tensioned, necked material within from about 0.25 to about 0.5 seconds of exiting the die tip. For example, the film of elastomer is deposited onto the tensioned, necked material within from about 0.3 to about 0.45 seconds of exiting the die tip.

According to one aspect of the invention, the film of elastomer may be extruded at a temperature of from about 182.2°C (about 360°) to about 282.2°C (about 540°F). For example, a film of elastomer may be extruded at a temperature of from about 198.9°C (about 390°) to about 248.9°C (about 480°F). Desirably, the film of elastomer may be extruded at a temperature from about 204.4°C (about 400°) to about 215.6°C (about 420°F).

Pressure is applied to bond the necked material to the elastomeric film. This pressure may be applied utilizing, for example, a pressure roll arrangement. The pressure roll arrangement may include at least a first roll and a second roll configured to provide a gap between the rolls. Generally speaking, the gap setting between the first and second rolls of the pressure roll arrangement is large enough so that the force required to extend the resulting composite elastic material on the first pull is at least about 25 percent less than the force required to extend an identical composite elastic material prepared in an identical pressure roll arrangement with the pressure rolls in substantial bonding contact.

Alternatively, and/or additionally, pressure applied to bond the necked material to the extruded elastomeric film may be generated by the tensioning force on the tensioned, necked material as the elastomeric film is temporarily configured between a layer of tensioned, necked material and a roller or surface (e.g., a protruding roller or protruding surface).

The elastomeric film may be a film of elastomeric pressure sensitive elastomer adhesive. The elastomeric pressure sensitive elastomer adhesive may be formed from a blend including an elastomeric polymer and a tackifying resin.

Also encompassed is a composite elastic material produced by the method described above.

According to one aspect of the present invention, the method of producing a composite elastic necked-bonded material including one or more layers of necked material joined to one or more layers of elastic sheet includes the following steps: 1) providing a first and second continuously advancing sheet, each sheet being composed of at least one tensioned, necked material and each sheet advancing in intersecting relationship to form a contact zone; 2) extruding a film of substantially molten elastomer through a die tip between the first and second continuously advancing sheet of tensioned, necked material so that the extruded elastomeric film is deposited into the contact zone within from about 0.1 to about 1 second of exiting the die tip to form a multilayer material; and 3) immediately applying pressure to the multilayer material to bond each tensioned, necked material to the elastomeric film.

Generally speaking, the first and second continuously advancing sheets of tensioned, necked material may be material that was pre-necked and treated to remain in its necked condition (e.g., a reversibly necked material) or may be provided by applying a tensioning force to at least one neckable material to neck the material.

The film of elastomer may be deposited onto the tensioned, necked material within from about 0.25 to about 0.5 seconds of exiting the die tip. For example, the film of elastomer is deposited onto the tensioned, necked material within from about 0.3 to about 0.45 seconds of exiting the die tip.

In an aspect of the invention, the film of elastomer may be extruded at a temperature of from about 182.2°C (about 360°F) to about 282.2°C (about 540°F). For example, a film of elastomer may be extruded at a temperature of from about 198.9°C (about 390°F) to about 248.9°C (about 480°F). Desirably, the film of elastomer may be extruded at a temperature from about 204.4°C (about 400°F) to about 215.6°C (about 420°F).

Pressure is applied to bond the necked material to the elastomeric film. The pressure is be applied utilizing, for example, a pressure roll arrangement. The pressure roll arrangement includes at least a first roll and a second roll configured to provide a gap between the rolls. One or both of the first and second roll may be a smooth roll. Generally speaking, the gap setting between the first and second rolls of the pressure roll arrangement is large enough so that the force required to extend the resulting composite elastic material on the first pull is at least about 25 percent less than the force required to extend an identical composite elastic material prepared in an identical pressure roll arrangement with the pressure rolls in substantial bonding contact. The method of the present invention is practiced with the gap setting between the pressure rollers at about 0.387mm (about 15 mils) to about 3.175mm (about 125 mils). As a further example, the method of the present invention may be practiced with the gap setting between the pressure rollers at about 0.762mm (about 30 mils) to about 2.54mm (about 100 mils). Desirably, the method of the present invention is to be practiced with the gap setting between the pressure rollers about 1.016mm (about 40 mils) to about 1.651mm (about 65 mils).

Pressure applied to bond the necked material to the elastomeric film may be generated by the tensioning force on the tensioned, necked material as the elastomeric film is temporarily configured between a layer of tensioned, necked material and a protruding roller.

The elastomeric film may be a film of elastomeric pressure sensitive elastomer adhesive. The pressure sensitive elastomer adhesive may be formed from a blend including an elastomeric polymer and a tackifying resin.

Also encompassed is a composite elastic material produced by the method described above.

The necked material used as a component of the composite elastic necked-bonded material is formed from a neckable material. If the material is stretchable, it may be necked by stretching in a direction generally perpendicular to the desired direction of neck-down. The neckable material may be any material that can be necked and joined to an elastic sheet. Such neckable materials include knitted and loosely woven fabrics, bonded carded webs, spunbonded webs or meltblown webs. The meltblown web may include meltblown microfibers. The neckable material may also have multiple layers such as, for example, multiple spunbonded layers and/or multiple meltblown layers. The neckable material may be made of polymers such as, for example, polyolefins. Exemplary polyolefins include polypropylene, polyethylene, ethylene copolymers and propylene copolymers.

The elastic sheet may be a pressure sensitive elastomer adhesive sheet. If the elastic sheet is nonwoven web of elastic fibers or pressure sensitive elastomer adhesive fibers, the fibers may be meltblown fibers. More particularly, the meltblown fibers may be meltblown microfibers.

Other aspects of this invention provide that the pressure sensitive elastomer adhesive sheet and necked material may be joined without the application of heat such as, for example, by a pressure bonder arrangement or by tensioned wind-up techniques.

A method of producing a composite elastic necked-bonded material including one or more layers of necked material joined to one or more layers of elastic sheet include the following steps: 1) applying a tensioning force to at least one neckable material to neck the material; and 2) joining the tensioned, necked material to at least one elastic sheet at least at two locations.

The elastic sheet and the tensioned, necked material may be joined by overlaying the materials and applying heat and/or pressure to the overlaid materials. Alternatively, the layers may be joined by using other bonding methods and materials such as, for example, adhesives, pressure sensitive adhesives, ultrasonic welding, high energy electron beams, and/or lasers. In one aspect of the present invention, the elastic sheet may be formed directly on the necked material utilizing processes, such as, for example, meltblowing processes and film extrusion processes.

According to one aspect of the present invention, the method of producing a composite elastic necked-bonded material including one or more layers of necked material joined to one or more layers of elastic sheet includes the following step:
1) providing a first and second continuously advancing sheet of at least one tensioned, necked material, each sheet comprising at least one tensioned, necked material, and each sheet advancing in intersecting relationship to form a contact zone;
2) extruding a film of substantially molten pressure sensitive elastomer adhesive through a die tip between the first and second continuously advancing sheet of tensioned, necked material so that the extruded pressure sensitive elastomer adhesive film is deposited into the contact zone between the tensioned, necked materials within from about 0.1 to about 1 second of exiting the die tip to form a multilayer material; and
3) immediately applying pressure to the multilayer material utilising a pressure roll arrangement comprising at least a first roll, a second roll and a controlled gap;
4) wherein the controlled gap between the first and second rolls of the pressure roll arrangement is set so that the force required to extend the resulting composite elastic material on the first pull is at least about 25 percent less than the force required to extend an identical composite elastic material prepared in an identical pressure roll arrangement with a pressurised nip such that the rolls are essentially in contact in the absence of material.

FIG. 1 is a schematic representation of an exemplary process for forming a composite elastic necked-bonded material.

FIG. 2 is a plan view of an exemplary neckable material before tensioning and necking.

FIG. 2A is a plan view of an exemplary necked material.

FIG. 28 is a plan view of an exemplary composite elastic necked-bonded material while partially stretched.

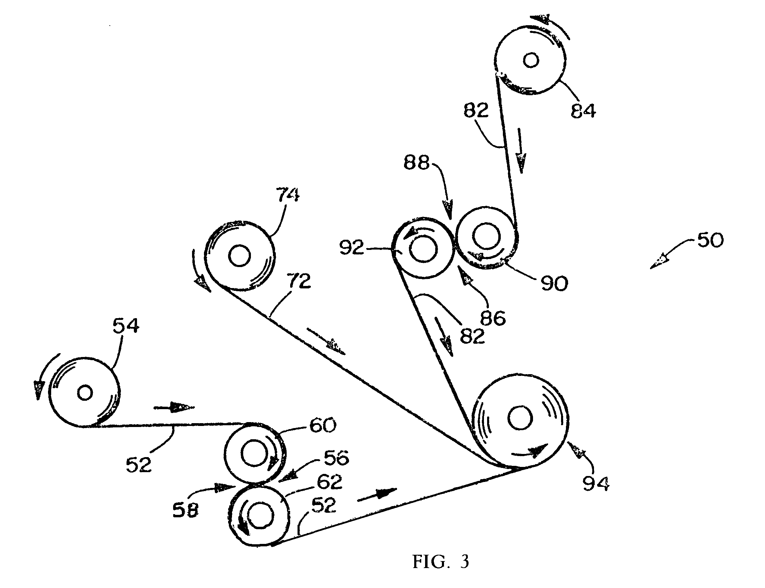

FIG. 3 is a schematic representation of an exemplary process for forming a composite elastic necked-bonded material using a tensioned wind-up method.

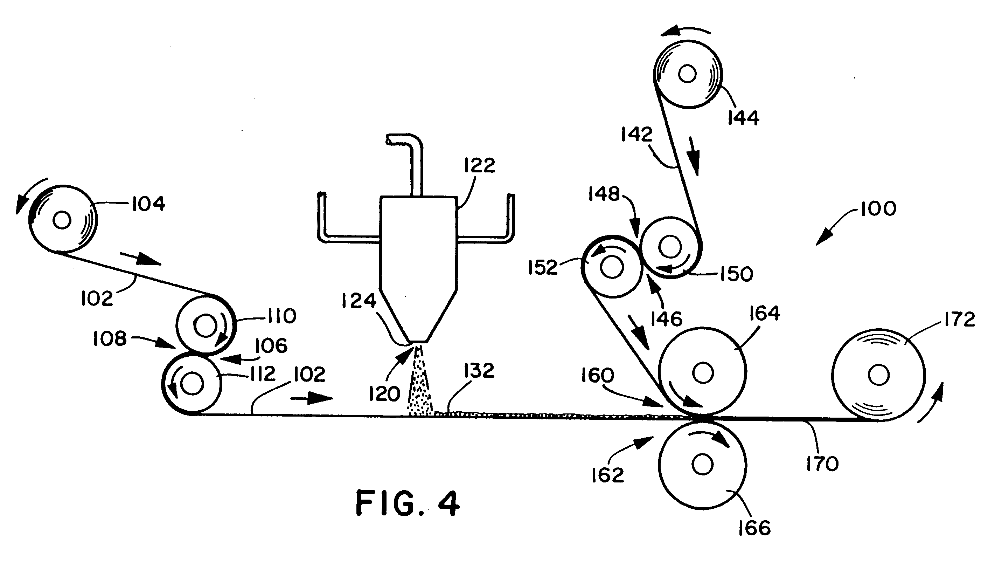

FIG. 4 is a schematic representation of an exemplary process for forming a composite elastic necked-bonded material by meltblowing an elastic web between two necked material layers.

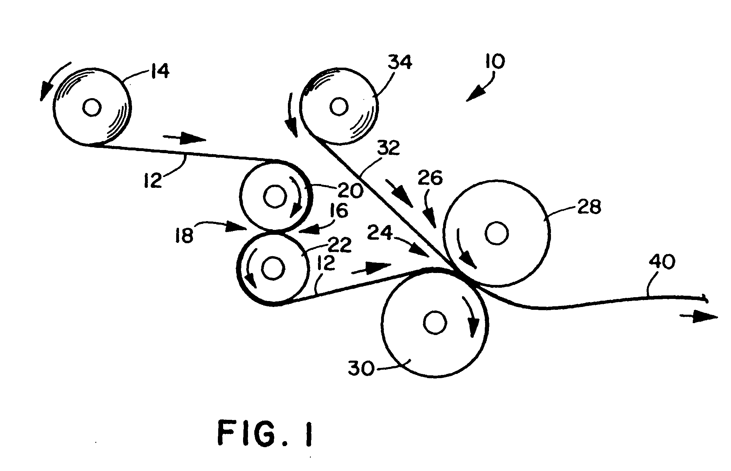

Referring to Fig. 1 of the drawings there is schematically illustrated at 10 a process for forming a composite elastic necked-bonded material.

According to the present invention, a neckable material 12 is unwound from a supply roll 14 and travels in the direction indicated by the arrow associated therewith as the supply roll 14 rotates in the direction of the arrows associated therewith. The neckable material 12 passes through a nip 16 of the drive roller arrangement 18 formed by the drive rollers 20 and 22.

The neckable material 12 may be formed by known nonwoven extrusion processes, such as, for example, known meltblowing processes or known spunbonding processes, and passed directly through the nip 16 without first being stored on a supply roll.

An elastic sheet 32 is unwound from a supply roll 34 and travels in the direction indicated by the arrow associated therewith as the supply roll 34 rotates in the direction of the arrows associated therewith. The elastic sheet passes through the nip 24 of the bonder roller arrangement 26 formed by the bonder rollers 28 and 30. The elastic sheet 32 may be formed by extrusion processes such as, for example, meltblowing processes or film extrusion processes and passed directly through the nip 24 without first being stored on a supply roll.

The neckable material 12 passes through the nip 16 of the S-roll arrangement 18 in a reverse-S path as indicated by the rotation direction arrows associated with the stack rollers 20 and 22. From the S-roll arrangement 18, the neckable material 12 passes through the pressure nip 24 formed by a bonder roller arrangement 26. Because the peripheral linear speed of the rollers of the S-roll arrangement 18 is controlled to be less than the peripheral linear speed of the rollers of the bonder roller arrangement 26, the neckable material 12 is tensioned between the S-roll arrangement 18 and the pressure nip of the bonder roll arrangement 26. By adjusting the difference in the speeds of the rollers, the neckable material 12 is tensioned so that it necks a desired amount and is maintained in such tensioned, necked condition while the elastic sheet 32 is joined to the necked material 12 during their passage through the bonder roller arrangement 26 to form a composite elastic necked-bonded laminate 40.

Other methods of tensioning the neckable material 12 may be used such as, for example, tenter frames or other cross-machine direction stretcher arrangements that expand the neckable material 12 in other directions such as, for example, the cross-machine direction so that, after bonding to the elastic sheet 32, the resulting composite elastic necked-bonded material 40 will be elastic in a direction generally parallel to the direction of necking, i.e., in the machine direction.

The neckable material 12 may be a nonwoven material such as, for example, spunbonded web, meltblown web or bonded carded web. If the neckable material is a web of meltblown fibers, it may include meltblown microfibers. The neckable material 12 may be made of fiber forming polymers such as, for example, polyolefins. Exemplary polyolefins include one or more of polypropylene, polyethylene, ethylene copolymers, propylene copolymers, and butene copolymers. Useful polypropylenes include, for example, polypropylene available from the Himont Corporation under the trade designation PC-973, polypropylene available from the Exxon Chemical Company under the trade designation Exxon 3445, and polypropylene available from the Shell Chemical Company under the trade designation DX 5A09.

In one embodiment of the present invention, the neckable material 12 is a multilayer material having, for example, at least one layer of spunbonded web joined to at least one layer of meltblown web, bonded carded web or other suitable material. For example, neckable material 12 may be a multilayer material having a first layer of spunbonded polypropylene having a basis weight from about 6.782 to about 271.28 g/m² (about 0.2 to about 8 ounces per square yard (osy)), a layer of meltblown polypropylene having a basis weight from about 6.782 to about 135.64 g/m² (about 0.2 to about 4 osy), and a second layer of spunbonded polypropylene having a basis weight of about 6.782 to about 271.28 g/m² (about 0.2 to about 8 osy). Alternatively, the neckable material 12 may be single layer of material such as, for example, a spunbonded web having a basis weight of from about 6.782 to about 339.1 g/m² (about 0.2 to about 10 osy) or a meltblown web having a basis weight of from about 6.782 to about 271.28 g/m² (about 0.2 to about 8 osy).

The neckable material 12 may also be a composite material made of a mixture of two or more different fibers or a mixture of fibers and particulates. Such mixtures may be formed by adding fibers and/or particulates to the gas stream in which meltblown fibers are carried so that an intimate entangled commingling of meltblown fibers and other materials, e.g., wood pulp, staple fibers and particulates such as, for example, hydrocolloid (hydrogel) particulates commonly refered to as superabsorbant materials, occurs prior to collection of the meltblown fibers upon a collecting device to form a coherent web of randomly dispersed meltblown fibers and other materials such as disclosed in U.S. Patent No. 4,100,324, the disclosure of which is hereby incorporated by reference.

If the neckable material 12 is a nonwoven web of fibers, the fibers should be joined by interfiber bonding to form a coherent web structure which is able to withstand necking. Interfiber bonding may be produced by entanglement between individual meltblown fibers. The fiber entangling is inherent in the meltblown process but may be generated or increased by processes such as, for example, hydraulic entangling or needlepunching. Alternatively and/or additionally a bonding agent may be used to increase the desired bonding.

The elastic sheet 32 may be made from any material which may be manufactured in sheet form. Generally, any suitable elastomeric fiber forming resins or blends containing the same may be utilized for the nonwoven webs of elastomeric fibers of the invention and any suitable elastomeric film forming resins or blends containing the same may be utilized for the elastomeric films of the invention.

For example, the elastic sheet 32 may be made from block copolymers having the general formula A-B-A' where A and A' are each a thermoplastic polymer endblock which contains a styrenic moiety such as a poly (vinyl arene) and where B is an elastomeric polymer midblock such as a conjugated diene or a lower alkene polymer. The elastic sheet 32 may be formed from, for example, (polystyrene/poly(ethylenebutylene)/polystyrene) block copolymers available from the Shell Chemical Company under the trademark KRATON G. One such block copolymer may be, for example, KRATON G-1657.

Other exemplary elastomeric materials which may be used to form elastic sheet 32 include polyurethane elastomeric materials such as, for example, those available under the trademark ESTANE from B. F. Goodrich & Co., polyamide elastomeric materials such as, for example, those available under the trademark PEBAX from the Rilsan Company, and polyester elastomeric materials such as, for example, those available under the trade designation Hytrel from E. I. DuPont De Nemours & Company. Formation of elastic sheets from polyester elastic materials is disclosed in, for example, U.S. Patent No. 4,741,949 to Morman et al., hereby incorporated by reference.

A polyolefin may also be blended with the elastomeric polymer to improve the processability of the composition. The polyolefin must be one which, when so blended and subjected to an appropriate combination of elevated pressure and elevated temperature conditions, is extrudable, in blended form, with the elastomeric polymer. Useful blending polyolefin materials include, for example, polyethylene, polypropylene and polybutene, including ethylene copolymers, propylene copolymers and butene copolymers. A particularly useful polyethylene may be obtained from the U.S.I. Chemical Company under the trade designation Petrothaene NA601 (also referred to herein as PE NA601 or polyethylene NA601). Two or more of the polyolefins may be utilized. Extrudable blends of elastomeric polymers and polyolefins are disclosed in, for example, U.S. Patent No. 4,663,220 to Wisneski et al., hereby incorporated by reference.

The elastic sheet 32 may also be a pressure sensitive elastomer adhesive sheet. For example, the elastic material itself may be tacky or, alternatively, a compatible tackifying resin may be added to the extrudable elastomeric compositions described above to provide an elastomeric sheet that can act as a pressure sensitive adhesive, e.g., to bond the elastomeric sheet to a tensioned, necked nonelastic web. In regard to the tackifying resins and tackified extrudable elastomeric compositions, note the resins and compositions as described in U.S. Patent No. 4,789,699, filed October 15, 1986 of J. S. Keiffer and T. J. Wisneski for "Ambient Temperature Bondable Elastomeric Nonwoven Web", the disclosure of which is hereby incorporated by reference.

Any tackifier resin can be used which is compatible with the elastomeric polymer and can withstand the high processing (e.g., extrusion) temperatures. If blending materials such as, for example, polyolefins or extending oils are used, the tackifier resin should also be compatible with those blending materials. Generally, hydrogenated hydrocarbon resins are preferred tackifying resins, because of their better temperature stability. REGALREZ™ and ARKON™ P series tackifiers are examples of hydrogenated hydrocarbon resins. ZONATAK™501 lite is an example of a terpene hydrocarbon. REGALREZ hydrocarbon resins are available from Hercules Incorporated. ARKON P series resins are available from Arakawa Chemical (U.S.A.) Incorporated. Of course, the present invention is not limited to use of such three tackifying resins, and other tackifying resins which are compatible with the other components of the composition and can withstand the high processing temperatures, can also be used.

A pressure sensitive elastomer adhesive may include, for example, from about 40 to about 80 percent by weight elastomeric polymer, from about 5 to about 40 percent polyolefin and from about 5 to about 40 percent resin tackifier. For example, a particularly useful composition included, by weight, about 61 to about 65 percent KRATON G-1657, about 17 to about 23 percent Polyethylene NA-601, and about 15 to about 20 percent REGALREZ 1126.

The elastic sheet 32 may also be a multilayer material in that it may include two or more individual coherent webs or films. Additionally, the elastic sheet 12 may be a multilayer material in which one or more of the layers contain a mixture of elastic and nonelastic fibers or particulates. An example of the latter type of elastic web, reference is made to U.S. Patent No. 4,209,563, incorporated herein by reference, in which elastomeric and non-elastomeric fibers are commingled to form a single coherent web of randomly dispersed fibers. Another example of such a composite web would be one made by a technique such as disclosed in U.S. Patent No. 4,100,324 issued July 11, 1978 to Richard A. Anderson et al., and also incorporated herein by reference. That patent discloses a nonwoven material which includes a mixture of meltblown thermoplastic fibers and other materials. The fibers and other materials are combined in the gas stream in which the meltblown fibers are borne so that an intimate entangled commingling of meltblown fibers and other materials, e.g., wood pulp, staple fibers or particulates such as, for example, hydrocolloid (hydrogel) particulates commonly referred to as super-absorbents occurs prior to collection of the fibers upon a collecting device to form a coherent web of randomly dispersed fibers.

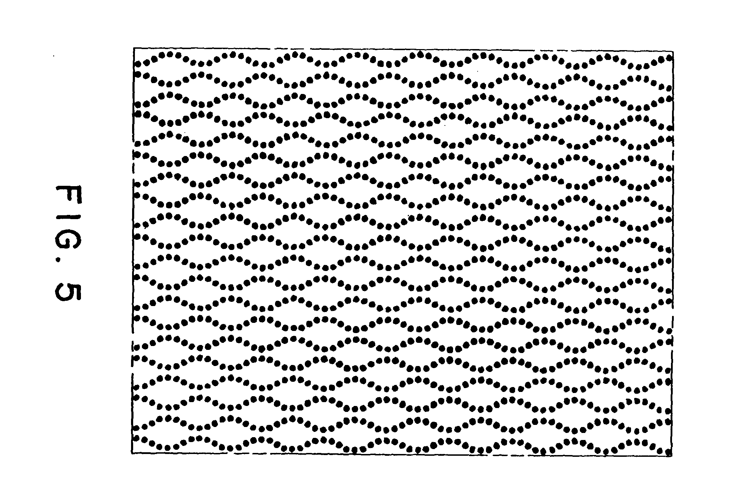

The bonder roller arrangement 26 may be a smooth calender roller 28 and a smooth anvil roller 30 or may include a patterned calender roller, such as, for example, a pin embossing roller arranged with a smooth anvil roller. One or both of the calender roller and the smooth anvil roller may be heated and the pressure between these two rollers may be adjusted by well-known means to provide the desired temperature, if any, and bonding pressure to join the necked material 12 to the elastic sheet 32 forming a composite elastic necked-bonded material 40. The necked material and the elastic sheet may be completely bonded together and still provide a composite elastic necked-bonded material with good stretch properties. That is, a composite elastic material may be formed by joining a necked material to an elastic sheet utilizing bonding surfaces such as, for example, smooth rollers or platens to provide a high bond surface area. A composite elastic necked-bonded material 40 may also be formed utilizing a bonding pattern such as, for example, the sinusoidal bonding pattern shown in Fig. 5. That pattern has approximately 11.62 pins for cm² (75 pins per square inch) with each pin about 0.1499 cm (about 0.059 inches) in diameter, providing a bond surface area of about 20.5 percent.

Necked materials may be joined to the elastic sheet 32 at least at two places by any suitable means such as, for example, thermal bonding or ultrasonic welding which softens at least portions of at least one of the materials, usually the elastic sheet because the elastomeric materials used for forming the elastic sheet 32 have a lower softening point than the components of the necked material 12. Joining may be produced by applying heat and/or pressure to the overlaid elastic sheet 32 and the necked material 12 by heating these portions (or the overlaid layer) to at least the softening temperature of the material with the lowest softening temperature to form a reasonably strong and permanent bond between the re-solidified softened portions of the elastic sheet 32 and the necked material 12.

Elastic sheets can be used having basis weights less than 16.955g/m² (0.5 osy (ounces per square yard)), for example, from about 13.564g/m² to about 8.478g/m² (about 0.25 to about 0.4 osy) Such extremely low basis weight sheets are useful for economic reasons, particularly for use in disposable products. Additionally, elastic sheets having higher basis weights wuch as, for example, from about 16.955g/m² to about 339.1g/m² (about 0.5 to about 10 osy) may also be used.

With regard to thermal bonding, one skilled in the art will appreciate that the temperature to which the materials, or at least the bond sites thereof, are heated for heat-bonding will depend not only on the temperature of the heated roll(s) or other heat sources but on the residence time of the materials on the heated surfaces, the basis weights of the materials and their specific heats and thermal conductivities. However, for a given combination of materials, and in view of the herein contained disclosure the processing conditions necessary to achieve satisfactory bonding can be readily determined by one of skill in the art.

Conventional drive means and other conventional devices which may be utilized in conjunction with the apparatus of Fig. 1 are well known and, for purposes of clarity, have not been illustrated in the schematic view of Fig. 1.

The relation between the original dimensions of the neckable material 12 to its dimensions after tensioning determines the approximate limits of stretch of composite elastic necked-bonded material. Because the neckable material 12 is able to stretch and return to its necked dimensions in directions such as, for example the machine direction or the cross-machine direction, the composite elastic necked-bonded material will be stretchable in generally the same direction as the neckable material 12.

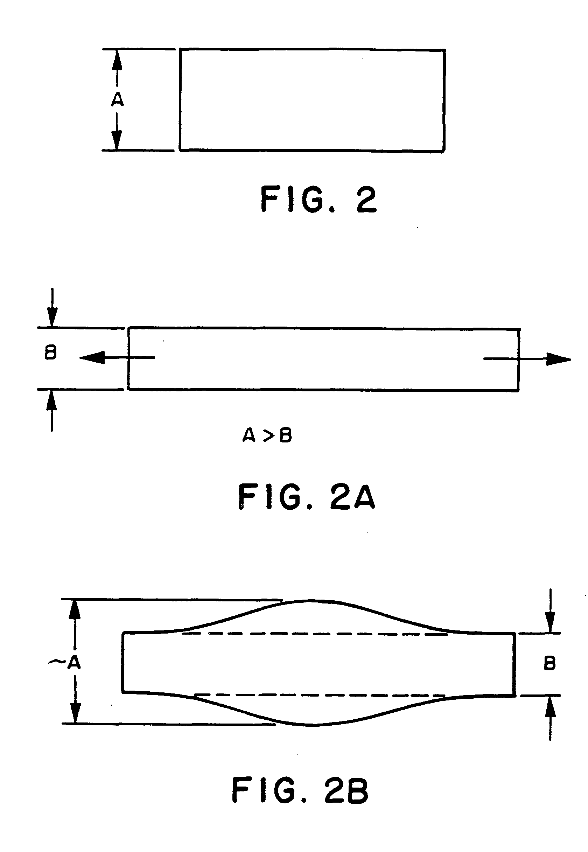

For example, with reference to Figs. 2, 2A, and 28, if it is desired to prepare a composite elastic necked-bonded material stretchable to a 150% elongation, a width of neckable material shown schematically and not necessarily to scale in Fig. 2 having a width "A" such as, for example, 250 cm, is tensioned so that it necks down to a width "B" of about 100 cm. The necked material shown in Fig 2A is then joined to an elastic sheet (not shown) having a width of approximately 100 cm and which is at least stretchable to a width of 250 cm. The resulting composite elastic necked-bonded material shown schematically and not necessarily to scale in Fig. 2B has a width "B" of about 100 cm and is stretchable to at least the original 250 cm width "A" of the neckable material for an elongation of about 150%. As can be seen from the example, the elastic limit of the elastic sheet needs only to be as great as the minimum desired elastic limit of the composite elastic necked-bonded material.

Referring now to Fig. 3 of the drawings, there is schematically illustrated at 50 an exemplary process for forming a composite elastic necked-bonded material by a tensioned wind-up method. A first neckable material 52 is unwound from a supply roll 54 and a second neckable material 82 is unwound from a supply roll 84. The neckable materials 52 and 82 then travel in the direction indicated by the arrows associated therewith as the supply rolls 54 and 84 rotate in the direction of the arrows associated therewith. The neckable material 52 then passes through the nip 56 of an S-roll arrangement 58 formed by the stack rollers 60 and 62. Likewise, the neckable material 82 passes through the nip 86 of an S-roll arrangement 88 formed by the stack rollers 90 and 92. The neckable materials 52 and 82 may be formed by known nonwoven extrusion processes such as, for example, known spunbonding or known meltblowing processes and passed through the nips 56 and 86 without first being stored on supply rolls.

An elastic sheet 72 is unwound from a supply roll 74 and travels in the direction indicated by the arrow associated therewith as supply roll 74 rotates in the direction of the arrows associated therewith. The elastic sheet 72 may be formed by known extrusion processes such as, for example, known meltblowing processes or known film extrusion processes without first being stored on a supply roll.

The neckable material 52 then passes through a nip 56 of an S-roll arrangement 58 in a reverse-S wrap path as indicated by the rotation direction of the arrows associated with the stack rollers 60 and 62. Likewise, the neckable material 82 passes through a nip 86 of an S-roll arrangement 88 in a reverse-S wrap path as indicated by the rotation direction arrows associated with the stack rollers 90 and 92. Because the peripheral linear speeds of the rollers of the S-roll arrangements 58 and 88 are controlled to be lower than the peripheral linear speed of the rollers of the wind-up roll 94, the neckable materials 52 and 82 are necked and tensioned so that they sandwich the elastic sheet 72 as they are wound up on the wind-up roll 94.

A two layer composite in which one side of the elastic sheet is protected to prevent bonding (e.g., covered with a plastic film) may be formed by the above-described method. Multilayer materials having multiple layers of elastic sheet and multiple layers of necked material such as, for example, palindromic laminates, may also be formed by the same method. The roll of material on the wind-up roll 94 may be heated to soften the elastic sheet so that the layers join to form a composite elastic necked-bonded material.

Alternatively, a necked material and a pressure sensitive elastomer adhesive sheet such as, for example, a pressure sensitive elastomer adhesive web of meltblown fibers may be joined by the above-described tensioned wind-up method. In that case, tension from the necked material provides pressure to activate the pressure sensitive elastomer adhesive sheet so that the layers join forming a composite elastic necked-bonded material.

The above-described tensioned wind-up bonding methods are suited for low basis weight elastomeric sheets. For example, elastic sheets may be used having a basis weights less than 16.955g/m² (0.5 osy (ounces per square yard)), for example, from about 8.4775g/m² to about 13.564g/m² (about 0.25 to about 0.4 osy). Such extremely low basis weight sheets are useful for economic reasons, particularly in disposable products. Additionally, elastic sheets having higher basis weights such as, for example, from about 16.955 to about 339.1 g/m² (about 0.5 to about 10 osy) may also be used.

With regard to the bonding pressure utilized when bonding is effected by the above-described tensioned wind-up method, specification of a bonding pressure does not, in itself, take into account complicating factors such as, for example, the bonding compatibility of elastic sheet and the necked materials and/or the basis weight weights of the materials. Nonetheless, one skilled in the art, taking into account such factors will readily be able to appropriately select and vary an effective bonding pressure.

Conventional drive means and other conventional devices which may be utilized in conjunction with the apparatus of Fig. 3 are well known and, for purposes of clarity, have not been illustrated in the schematic view of Fig. 3.

Referring now to Fig. 4 of the drawings, there is schematically illustrated at 100 an exemplary process for forming a composite elastic material by meltblowing a web of elastic fibers onto a first necked material, overlaying a second necked material and then joining the layers with a bonder roller arrangement.

A first neckable material 102 is unwound from a supply roll 104. The neckable material 102 then travels in the direction indicated by the arrow associated therewith as the supply roll 104 rotates in the direction of the arrow associated therewith. The neckable material 102 then passes through a nip 106 of an S-roll arrangement 108 formed by the stack rollers 110 and 112. The neckable material 102 may be formed by nonwoven extrusion processes, such as, for example, spunbonding or meltblowing processes, and then passed directly through the nip 106 of the S-roll arrangement 108 without first being stored on a supply roll.

The neckable material 102 then passes through the nip 106 of the S-roll arrangement 108 in a reverse S-wrap path as indicated by the rotation direction arrows associated with the stack rollers 110 and 112. Because the peripheral linear speed of the rollers of the S-roll arrangement 108 is controlled to be lower than the peripheral linear speed of the rollers of the bonder roller arrangement 162, the neckable material 102 is tensioned so that it necks a desired amount and is maintained in such tensioned, necked condition as the elastic sheet 132 is formed directly on the nonelastic material.

As the necked material 102 passes under the meltblowing process equipment 122, an elastic sheet 132 of meltblown fibers 120 is formed directly on the necked material 102. The meltblown fibers 120 may include meltblown microfibers.

Generally, any suitable elastomeric fiber forming resins or blends containing the same may be utilized for the nonwoven webs of elastomeric fibers of the invention and any suitable elastomeric film forming resins or blends containing the same may be utilized for the elastomeric films of the invention.

The elastic sheet 132 of meltblown fibers 120 may be formed from elastomeric polymers such as, for example, block copolymers having the general formula A-B-A' where A and A' are each a thermoplastic polymer endblock which contains a styrenic moiety such as a poly (vinyl arene) and where B is an elastomeric polymer midblock such as a conjugated diene or a lower alkene polymer. One such block copolymer may be, for example, KRATON G-1657.

Other exemplary elastomeric materials which may be used to form the elastic sheet 132 include elastomeric polyester materials, elastomeric polyurethane materials and elastomeric polyamide materials. The elastic sheet 132 may also be a pressure sensitive elastomer adhesive sheet. For example, the elastic sheet 132 may be formed from a blend of about 63% by weight KRATON G-1657, 20% polyethylene NA-601, and 17% REGALREZ 1126 having a melt flow of from about 12 grams per ten minutes to about 18 grams per ten minutes when measured at 190°C and under a 2160 gram load; an elongation of about 750%; a modulus of elongation at 100% of from about 1068.688 to almost1378.952 kPa (about 155 to about 200 psi); and a modulus of elongation at 300% of from about 1378.952 to about 1723.690 kPa (about 200 to about 250 psi). More particularly, the KRATON G block copolymer may have a melt flow of about 15 grams per ten minutes when measured at 190°C and under a 2160 gram load; an elongation of about 750%; a modulus of elongation at 100% of about 1206.6 kPa (about 175 psi); and a modulus of elongation at 300% of about 1551.3 kPa (about 225 psi). Such materials are described, for example, in previously referenced U.S. Patent No. 4,789,699, filed October 15, 1986 of J. S. Keiffer and T. J. Wisneski for "Ambient Temperature Bondable Elastomeric Nonwoven Web."

Additionally, the elastic sheet 132 may be a composite material in that it may be made of two or more individual coherent webs or it may be made of one or more webs individually containing a mixture of elastic and nonelastic fibers. An example of the latter type of elastic web is described in previously referenced U.S. Patent No. 4,209,563. Another example of such a composite web would be one made by a technique such as disclosed in previously referenced U.S. Patent No. 4,100,324.

A stream of elastomeric meltblown fibers 120 is directed from the meltblowing process equipment 122 on to the necked material 102 at a high velocity while the fibers are in a softened state so that bonding and/or entangling occurs between the deposited elastomeric sheet 132 of meltblown fibers 120 and the necked material 102.

Generally, the meltblown fibers 120 bond adequately to the necked material when the fibers have an initial high velocity, for example, from about 91.44m/s (about 300 feet per second) to about 304.8 m/s (about 1000 feet per second) Additionally, the vertical distance from forming nozzle 124 of the meltblowing process equipment 122 to the necked material 102 may range from about 10.16 to about 45.72cm (about 4 to about 18 inches). For example, the vertical distance may be set at about 30.48cm (about 12 inches). The elastic sheet 132 may also be formed by other known extrusion processes such as, for example, known film extrusion processes.

A second neckable material 142 is unwound from a supply roll 144. The neckable material 142 then travels in the direction indicated by the arrow associated therewith as the supply roll 144 rotates in the direction of the arrow associated therewith. The neckable material 142 then passes through a nip 146 of an S-roll arrangement 148 formed by the stack rollers 150 and 152. Alternatively, the neckable material 142 may be formed by known nonwoven extrusion processes, such as, for example, known spunbonding or known meltblowing processes, and then passed directly through the nip 146 of the S-roll arrangement 148 without first being stored on a supply roll. The neckable material 142 passes through the nip 146 of the S-roll arrangement 148 in a reverse S-wrap path as indicated by the rotation direction arrows associated with the stack rollers 150 and 152. Because the peripheral linear speed of the rollers of the S-roll arrangement 148 is controlled to be less than the peripheral linear speed of the rollers of the bonder roller arrangement 162, the neckable material 142 is tensioned so that it necks a desired amount and is maintained in such tensioned, necked condition as it is overlaid on the elastic sheet 132 and the necked material 102. The three layers are passed through the nip 160 of a bonder roller arrangement 162 to produce a composite elastic necked bonded material 170 which is wound on a wind-up roll 172.

The bonder roller arrangement 162 may be a patterned calender roller 164 arranged with a smooth anvil roller 166. Alternatively, a smooth calender roller may be used. One or both of the calender roller 164 and the anvil roller 166 may be heated and the pressure between these two rollers may be adjusted by well-known means to provide the desired temperature and bonding pressure. Other methods may be used to join the layers such as, for example, adhesives, ultrasonic welding, laser beams, and/or high energy electron beams. The bond surface area on the composite elastic necked bonded laminate 170 may approach about 100 percent and still provide a material with good stretch properties. Alternatively, a bond pattern may be used such as, for example, the sinusoidal dot pattern shown in Fig. 5.

The elastic sheet 132 may also be a pressure sensitive elastomer adhesive sheet such as, for example, a pressure sensitive elastomer adhesive web of meltblown fibers. In such case, joining the necked material layers 102 and 142 to the pressure sensitive elastomer adhesive sheet 132 may be accomplished by pressure bonding techniques such as, for example, pressure bonder rollers or tensioned wind-up methods.

Conventional drive means and other conventional devices which may be utilized in conjunction with the apparatus of Fig. 4 are well known and, for purposes of clarity, have not been illustrated in the schematic view of Fig. 4

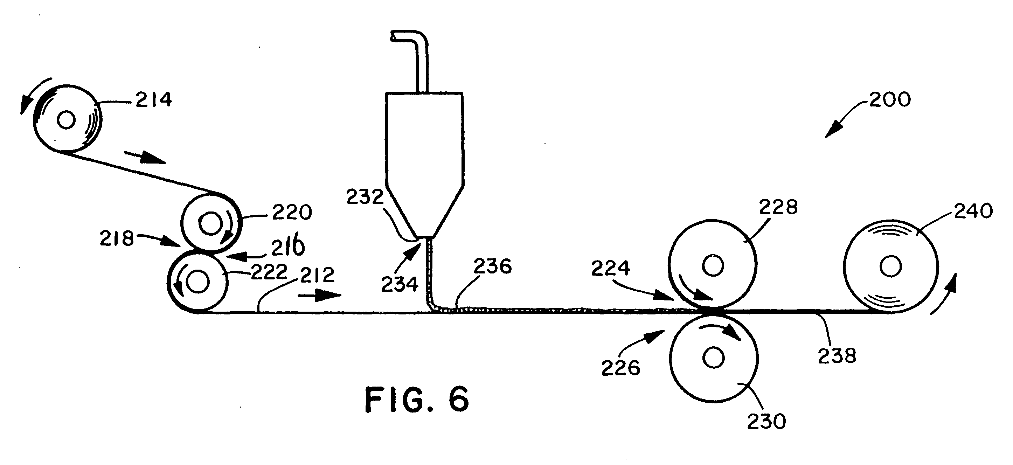

Referring now to Fig. 6 of the drawings there is illustrated at 200 a method for forming a composite elastic necked-bonded material utilizing a film-extrusion process.

According to the invention, a continuously-advancing tensioned, necked material 212 is provided so that it passes under a film extrusion apparatus. The tensioned, necked material 212 may be pre-necked and maintained in its necked configuration (e.g., by tension or by a treatment such as heat while the material is necked) for provision into the process. For example, the tensioned, necked material may be a reversibly necked material. Alternatively, the tensioned, necked material 212 may be a neckable material that is unwound from a supply roll 214 as it travels in'the direction indicated by the arrow associated therewith as the supply roll 214 rotates in the direction of the arrows associated therewith. The neckable material may be formed by known nonwoven extrusion processes, such as, for example, known meltblowing processes or known spunbonding processes, and passed directly through the nip 216 without first being stored on a supply roll.

The neckable material passes through the nip 216 of the S-roll arrangement 218 in a reverse-S path as indicated by the rotation direction arrows associated with the stack rollers 220 and 222. From the S-roll arrangement 218, the neckable material passes through the nip 224 formed by a pressure roller arrangement 226. The pressure roll arrangement 226 contains a first pressure roll 228 and a second pressure roll 230.

Because the peripheral linear speed of the rollers of the S-roll arrangement 218 is controlled to be less than the peripheral linear speed of the rollers of the pressure roller arrangement 226, the neckable material is tensioned between the S-roll arrangement 218 and the pressure nip of the bonder roll arrangement 226. By adjusting the difference in the speeds of the rollers, the neckable material is tensioned so that it necks a desired amount and is maintained in such tensioned, necked condition as a tensioned, necked material 212.

A substantially molten elastomer is extruded through a die tip 232 to form an extruded elastomeric film 234. This extruded elastomeric film 234 is deposited onto the tensioned, necked material 212 within from about 0.1 to about 1 second of exiting the die tip 232 to form a multilayer material 236. The extruded elastomeric film 234 may be deposited onto the tensioned, necked material within from about 0.25 to about 0.5 seconds of exiting the die tip. Desirably, the extruded elastomeric film 234 is deposited onto the tensioned, necked material within from about 0.3 to about 0.45 seconds of exiting the die tip.

According to the invention, the extruded elastomeric film 234 may be formed from any suitable elastomeric film forming resins or blends containing the same. In one aspect of the invention, the extruded elastomeric film 234 may be a pressure sensitive elastomer adhesive film. Such a pressure sensitive elastomer adhesive film may be formed from a blend of an elastomeric polymer and a tackifying resin and/or other additives. For example, the pressure sensitive elastomer adhesive may be composed of one or more block copolymers having the general formula A-B-A' where A and A' are each a thermoplastic polymer endblock which contains a styrenic moiety such as a poly (vinyl arene) and where B is an elastomeric polymer midblock such as a hydrogenated conjugated diene or a lower alkene polymer (e.g., (polystyrene/poly(ethylenebutylene)/polystyrene) block copolymers available from the Shell Chemical Company under the trademark KRATON G such as, for example, KRATON G-1657). Such block copolymers may be blended with tackifying resins such as, for example, REGALREZ hydrocarbon resins available from Hercules Incorporated. For example, a particularly useful composition included, by weight, about 61 to about 65 percent KRATON G-1657, about 17 to about 23 percent Polyethylene NA-601, and about 15 to about 20 percent REGALREZ 1126.

Generally speaking, the film of elastomer may be extruded at a temperature suitable for conventional film extrusion processes for the particular elastomeric material. For example, a composition containing, by weight, about 61 to about 65 percent KRATON® G-1657, about 17 to about 23 percent Polyethylene NA-601, and about 15 to about 20 percent REGALREZ 1126 may be extruded into an elastomeric film (e.g., pressure sensitive elastomer adhesive film) at a temperature of from about 182.2°C to about 282.2°C (about 360° to about 540°F). As a further example, an elastomeric film (e.g., pressure sensitive elastomer adhesive film) may be extruded at a temperature of from about 198.9°C to about 215.6°C (about 390° to about 420°F). Desirably, an elastomeric film (i.e., pressure sensitive elastomer adhesive film) may be extruded at a temperature of about 204°C (400°F).

Immediately after the extruded elastomeric film 234 is deposited onto the tensioned, necked material 212 to form a multilayer material 236, pressure is applied to bond the tensioned, necked material 212 to the extruded elastomeric film 234 thereby forming a composite elastic necked-bonded material 238 which is wound up on a wind-up roll 240. In one embodiment of the invention, the multilayer material 236 is introduced into the nip 224 of a pressure roll arrangement 226. Generally speaking, a nip is an area located between two rolls in close proximity. A gap or a controlled gap refers to a nip with a measurable space between the rollers. For purposes of the present invention, a pressurized gap refers to a nip set up such that the rolls are essentially in contact in the absence of material (passing between the rolls).

The pressure roll arrangement 226 includes at least a first pressure roll 228 and a second pressure roll 230 wnich can be set to define a controlled gap between the rolls. Alternatively, the pressure rolls may be set to define a pressurized nip such that the rolls are essentially in contact when no multilayer material 236 is between the rolls (i.e., in the absence of material). Desirably, one or both of the pressure rolls may be chilled. For example, one or both of the pressure rolls may be chilled to temperatures of 12.8°C to 10.0°C (55° to 50°F) or less. Chilling the pressure rolls is believed to help cool the extruded polymer film so it more rapidly "sets" in bonding contact with the tensioned, necked material.

Generally speaking, the gap setting between the first and second rolls of the pressure roll arrangement is large enough so that the force required to extend the resulting composite elastic material. on the first pull is at least about 25 percent less than the force required to extend an identical composite elastic material prepared in an identical pressure roll arrangement with a pressurized nip such that the rolls are essentially in contact in the absence of material. The method of the present invention is practiced with the gap setting between the pressure rollers at about 0.381mm (about 15 mils) to about 3.175mm (about 125 mils). As an example, the method of the present invention may be practiced with the gap setting between the pressure rollers at about 0.762mm (about 30mils) to about 2.54mm (about 100 mils). Desirably, the method of the present invention is practiced with the gap setting between the pressure rollers at about 1.016mm (about 40 mils) to about 1.651mm (about 65 mils)

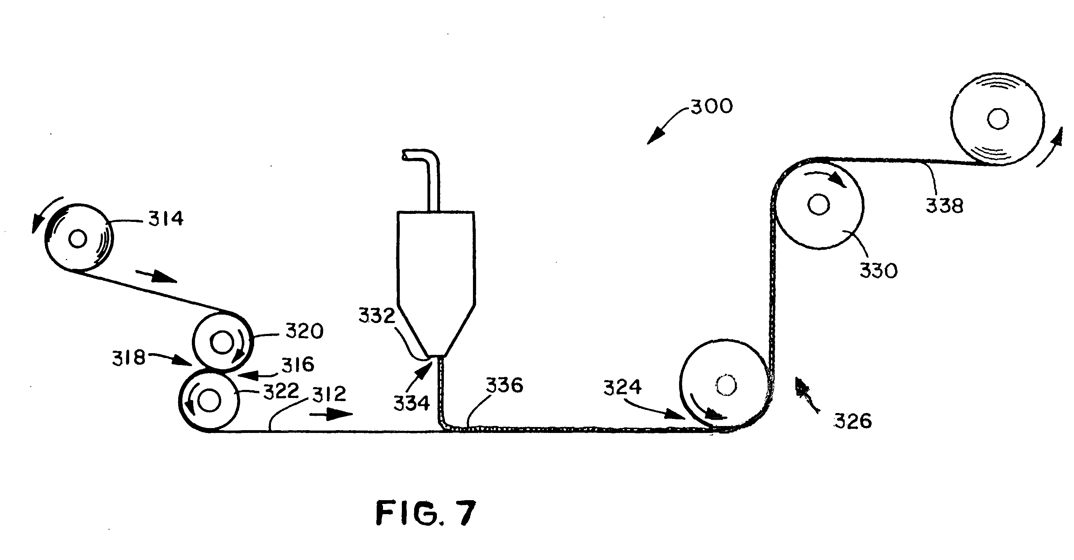

Referring now to Fig. 7 of the drawings there is illustrated at 300 a process for forming a composite elastic necked-bonded material utilizing a film-extrusion step.

According to the invention, a continuously advancing tensioned, necked material 312 is provided so that is passes under an film extrusion apparatus. The tensioned, necked material 312 may be pre-necked and maintained in its necked configuration (e.g., by tension or by a treatment such as heat) for provision into the process. Alternatively, the tensioned, necked material 312 may be a neckable material that is unwound from a supply roll 314 and travels in the direction indicated by the arrow associated therewith as the supply roll 314 rotates in the direction of the arrows associated therewith. The neckable material may be formed by known nonwoven extrusion processes, such as, for example, known meltblowing processes or known spunbonding processes, and passed directly through the nip 316 without first being stored on a supply roll.

The neckable material passes through the nip 316 of the S-roll arrangement 318 in a reverse-S path as indicated by the rotation direction arrows associated with the stack rollers 320 and 322. From the S-roll arrangement 318, the neckable material passes across the first roll surface 324 of a drive roll arrangement 326. The drive roll arrangement 326 contains a first drive roll 328 and an idler roll 330.

Because the peripheral linear speed of the rollers of the S-roll arrangement 318 is controlled to be less than the peripheral linear speed of the rollers of the drive roll arrangement 326, the neckable material is tensioned between the S-roll arrangement 318 and the first surface 324 of the drive roll arrangement 326. By adjusting the difference in the speeds of the rollers, the neckable material is tensioned so that it necks a desired amount and is maintained in such tensioned, necked condition.

A substantially molten elastomer is extruded through a die tip 332 to form an extruded elastomeric film 334. This extruded elastomeric film 334 is deposited onto the tensioned, necked material 312 within from about 0.1 to about 1 second of exiting the die tip 332 to form a multilayer material 336. The extruded elastomeric film 334 may be deposited onto the tensioned, necked material within from about 0.25 to about 0.5 seconds of exiting the die tip. Desirably, the extruded elastomeric film 334 is deposited onto the tensioned, necked material within from about 0.3 to about 0.45 seconds of exiting the die tip.

According to the invention, the extruded elastomeric film 334 may be formed from any suitable elastomeric film forming resins or blends containing the same. In this embodiment of the invention, it is desirable that the extruded elastomeric film 334 be a pressure sensitive elastomer adhesive film. Such a pressure sensitive elastomer adhesive film may be formed from a blend of an elastomeric polymer and a tackifying resin and/or other additives. For example, the pressure sensitive elastomer adhesive may be composed of one or more elastomeric block copolymers. Useful elastomeric block copolymer include (polystyrene/poly(ethylene-butylene)/polystyrene) block copolymers available from the Shell Chemical Company under the trademark KRATON G such as, for example, KRATON G-1657. Such block copolymers may be blended with tackifying resins such as, for example, REGALREZ hydrocarbon resins available from Hercules Incorporated. For example, a particularly useful composition included, by weight, about 61 to about 65 percent KRATON G-1657, about 17 to about 23 percent Polyethylene NA-601, and about 15 to about 20 percent REGALREZ 1126.

Generally speaking, the film of elastomer may be extruded at a temperature suitable for conventional film extrusion processes for the particular elastomeric material. For example, a composition containing, by weight, about 61 to about 65 percent KRATON® G-1657, about 17 to about 23 percent Polyethylene NA-601, and about 15 to about 20 percent REGALREZ 1126 may be extruded into an elastomeric film (e.g., pressure sensitive elastomer adhesive film) at a temperature of from about 182.2°C to about 282.2°C (about 360° to about 540°F). As a further example, an elastomeric film (e.g., pressure sensitive elastomer adhesive film) may be extruded at a temperature of from about 198.9°C to about 215.6°C (about 390° to about 420°F). Desirably, an elastomeric film (i.e., pressure sensitive elastomer adhesive film) may be extruded at a temperature of about 204.4°C (400°F).

Immediately thereafter, the multilayer material 336 is introduced onto the first surface 324 of the drive roll arrangement 326. The tension of the tensioned, necked material 312 produced by the difference in the speeds of the rollers generates pressure as the elastomeric film 334 is temporarily configured between the layer of tensioned, necked material 312 and the first surface of 324 of the drive roll arrangement 326. This pressure bonds the tensioned, necked material 312 to the elastomeric film 334 thereby forming a composite elastic necked-bonded material 338 which is wound up on a wind-up roll 340. Since the level of tension needed to generate pressure to bond the components together is generally higher than the tension required to move the material through the process, additional drive roll arrangements may be used. Desirably, the drive roll is chilled. For example, the drive roll may be chilled to temperatures of 12.8°C - 10°C (55°F - 50°F) or less.

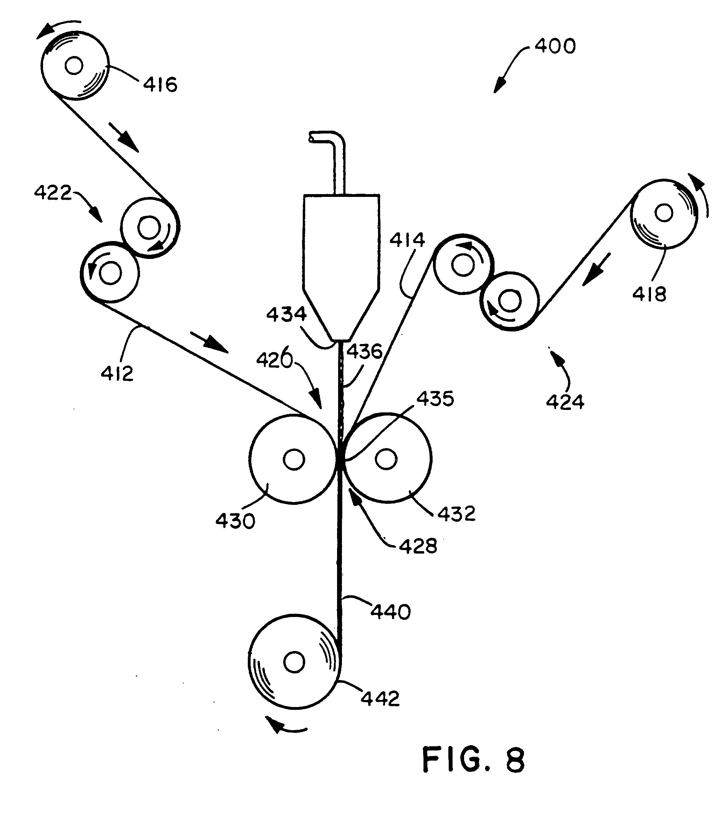

Referring now to Fig. 8 of the drawings there is schematically illustrated at 400 a process for forming a composite elastic necked-bonded material utilizing a film-extrusion step.

According to the invention, a first and second continuously advancing sheet of tensioned, necked material 412 and 414 respectively are provided to pass under a film extrusion apparatus. Each sheet is composed of at least one tensioned, necked material (i.e., multiple layers of tensioned, necked materials may be used). The tensioned, necked material 412 and 414 may be pre-necked and maintained in its necked configuration (e.g., by tension or by a treatment such as heat) for provision into the process. Alternatively, each tensioned, necked material 412 and 414 may be neckable materials that are unwound from supply rolls 416 and 418 respectively. The neckable materials may be formed by known nonwoven extrusion processes, such as, for example, known meltblowing processes or known spunbonding processes, and passed directly to the contact zone without first being stored on a supply roll.

Each neckable material passes through the nip of an S-roll arrangement, 422 and 424 respectively in a reverse-S path as indicated by the rotation direction arrows associated with the stack rollers. From the S-roll arrangements 422 and 424, the neckable materials pass through the pressure nip 426 formed by a pressure roller arrangement 428. The pressure roll arrangement contains a first pressure roll 430 and a second pressure roll 432.

Because the peripheral linear speeds of the rollers of the S-roll arrangements 422 and 424 are controlled to be less than the peripheral linear speed of the rollers of the pressure roller arrangement 428, the neckable materials are tensioned between the S-roll arrangements and the pressure nip of the pressure roll arrangements. By adjusting the difference in the speeds of the rollers, the neckable materials are tensioned so that they neck a desired amount and are maintained in such tensioned, necked condition as tensioned, necked materials 412 and 414.

The tensioned, necked materials 412 and 414 are configured to advance in an intersecting relationship to form a contact zone located beneath a film extrusion apparatus.

A substantially molten elastomer is extruded through a die tip 434 to form an extruded elastomeric film 436. This extruded elastomeric film 436 is deposited into the contact zone 420 so that the tensioned, necked materials 412 and 414 immediately sandwich the film. The extruded elastomeric film 436 is deposited into the contact zone and between the tensioned, necked materials within from about 0.1 to about 1 second of exiting the die tip 434 to form a multilayer material 435. The extruded elastomeric film 436 may be deposited onto the tensioned, necked materials within from about 0.25 to about 0.5 seconds of exiting the die tip. Desirably, the extruded elastomeric film 436 is deposited onto the tensioned, necked materials within from about 0.3 to about 0.45 seconds of exiting the die tip.

According to the invention, the extruded elastomeric film 436 may be formed from any suitable elastomeric film forming resins or blends containing the same. In one aspect of the invention, the extruded elastomeric film 436 may be a pressure sensitive elastomer adhesive film. Such a pressure sensitive elastomer adhesive film may be formed from a blend of an elastomeric polymer and a tackifying resin and/or other additives. For example, a particularly useful composition included, by weight, about 61 to about 65 percent KRATON G-1657, about 17 to about 23 percent Polyethylene NA-601, and about 15 to about 20 percent REGALREZ 1126.

Generally speaking, the film of elastomer may be extruded at a temperature suitable for conventional film extrusion processes for the particular elastomeric material. For example, a composition containing, by weight, about 61 to about 65 percent KRATON® G-1657, about 17 to about 23 percent Polyethylene NA-601, and about 15 to about 20 percent REGALREZ 1126 may be extruded into an elastomeric film (e.g., pressure sensitive elastomer adhesive film) at a temperature of from about 182.2°C to about 282.2°C (about 360° to about 540°F). As a further example, an elastomeric film (e.g., pressure sensitive elastomer adhesive film) may be extruded at a temperature of from about 198.9°C to about 248.9°C (about 400° to about 420°F). Desirably, an elastomeric film (i.e., pressure sensitive elastomer adhesive film) may be extruded at temperatures from about 204.4°C to about 215.6°C (about 400° to about 420°F)

Immediately after the extruded elastomeric film 436 is deposited into the contact zone and between the tensioned, necked materials to form a multilayer material 435, pressure is applied to bond the tensioned, necked materials 412 and 414 to the extruded elastomeric film 436 thereby forming a composite elastic necked-bonded material 440 which is wound up on a wind-up roll 442. The multilayer material 435 is introduced into the nip 426 of a pressure roll arrangement 428. The pressure roll arrangement 428 includes at least a first pressure roll 430 and a second pressure roll 432 which can be set to define a controlled gap between the rolls.

Alternatively, the pressure rolls may be set to define a pressurized nip such that the rolls are essentially in contact when no multilayer material 435 is between the rolls (i.e., in the absence of material). Desirably, one or both of the pressure rolls may be chilled. For example, one or both of the pressure rolls may be chilled to temperatures of 12.8°C to 10.0°C (55° to 50°F) or less. Chilling the pressure rolls is believed to help cool the extruded polymer film so it more rapidly "sets" in bonding contact with the tensioned, necked material.

Generally speaking, the gap setting between the first and second rolls of the pressure roll arrangement is fixed so that the force required to extend the composite elastic material on the first pull is at least about 25 percent less than the force required to extend an identical composite elastic material prepared in an identical pressure roll arrangement with a pressurized nip such that the rolls are essentially in contact in the absence of material. For example, the method of the present invention may be practiced with the gap setting between the pressure rollers at about 0.381mm (15 mils) to about 3.175mm (125 mils). As a further example, the method of the present invention may be practiced with the gap setting between the pressure rollers at about 0.762mm (30 mils) to about 2.540mm (100 mils). Desirably, the method of the present invention is practiced with the gap setting between the pressure rollers at about 40 mils to about 65 mils.

### EXAMPLES 1-7

The composite elastic necked-bonded materials of examples 1-7 were made by joining an elastic sheet to at least one necked material. Tables 1,3,5,7,8,10,12 and 14 provide Grab Tensile Test data for control samples and composite elastic necked-bonded material samples. The Grab Tensile Tests were performed on a constant rate of extension tester, Instron Model 1122 Universal Testing Instrument, using 10.16cm (4 inch) by 15.24cm (6 inch) samples. The following mechanical properties were determined for each sample: Peak Load, Peak Total Energy Absorbed and Percent Elongation.

The samples were also cycled on the Instron Model 1122 with Microcon II - 50 kg load cell and the results reported on Tables 2,4,6,9,11 and 13. The jaw faces of the tester were 2.54cm (1 inch) by 7.62cm (3 inches) so the samples were cut to 7.62cm (3 inch) by 17.78cm (7 inches) (17.78cm (7 inches) in the direction to be tested) and weighed individually in grams. A 10.16cm (4 inch) guage length was used. Chart and crosshead speeds were set for 50.80cm (20 inches) per minute and the unit was zeroed, balanced and calibrated according to the standard procedure. The maximum extension limit for the cycle length was set at a distance determined by calculating 56 percent of the "elongation to break" from the Grab Tensile Test. The samples were cycled to the specified cycle length four times and then were taken to break on the fifth cycle. The test equipment was set to report Peak Load in pounds force, Peak Elongation in percent and Peak Energy Absorbed in inch pounds force per square inch. The area used in the energy measurements (i.e., the surface area of material tested) is the gauge length (10.16cm (4 inches)) times the sample width (7.32 (3 inches)) which equals 77.4792cm² (12 inches²)

The results of the Grab Tensile tests and cycle tests have been normalized for measured basis weight.

Peak Total Energy Absorbed (TEA) as used herein is defined as the total energy under a stress versus strain (load versus elongation) curve up to the point of "peak" or maximum load. TEA is expressed in units of work/(length)² or N*m/m² (pounds force*inch) / (inches)². These values have been normaliyed by dividing bq the basis weight of the sample in g/m² (ounces per square yard (osy)) which produces units of ((N*m) */* m²) */* (g/m²) (((lbs_{f}*inch) */* inch²) */* osy).

Peak Load as used herein is defined as the maximum load or force encountered in elongating the sample to break. Peak Load is expressed in units of force N(lbs_{f}) which have been normalized for the basis weight of the material resulting in a number expressed in units of N/(g/m²) (lbs_{f}/(osy)).

Elongation as used herein is defined as relative increase in length of a specimen during the tensile test. Elongation is expressed as a percentage, i.e., [(increase in length)/(original length)] X 100.

Permanent Set after a stretching cycle as used herein is defined as a ratio of the increase in length of the sample after a cycle divided by the maximum stretch during cycling. Permanent Set is expressed as a percentage, i.e., [(final sample length - initial sample length)/(maximum stretch during cycling - initial sample length)] X 100. Permanent Set is related to recovery by the expression [permanent set = 100 - recovery] when recovery is expressed as a percentage. In the Tables, the value reported in the permanent set row at the column titled "To Break" is the value for Peak Elongation unless otherwise noted. (In the tables, the measured values in US units are written in parentheses. These have been converted into SI units.)

### Neckable Spunbonded Material

A neckable web of spunbonded polypropylene having a basis weight of about 27.128 g/m² (about 0.8 ounces per square yard (osy)) was tested on an Instron Model 1122 Universal Testing Instrument. The results are reported in Tables 1 and 2 under the heading "Control 1". The machine direction total energy absorbed is given in the column of Table 1 entitled "MD TEA". The machine direction peak load is given in the column entitled "MD Peak Load". The machine direction elongation to break is given in the column entitled "MD Elong". The cross-machine direction total energy absorbed is given in the column entitled "CD TEA". The cross-machine direction peak load is given in the column entitled "CD Peak Load". The cross-machine direction elongation to break is given in the column entitled "CD Elong".

The Peak TEA, Peak Load, and Permanent Set is given for each stretch cycle in Table 2. At the end of the series of cycles, the sample was elongated to break and the results reported under the heading "To Break".

### Elastic Sheet

A blend of about 63% by weight KRATON G-1657, 20% polyethylene NA-601 and 17% REGALREZ 1126 having a melt flow of about 15 grams per ten of about 750%; a modulus of elongation at 100% of about 1206.583 kPa (about 175 psi); and a modulus of elongation at 300% of about 1551.327 kPa (about 225 psi) was formed into an elastic sheet of meltblown fibers utilizing recessed die tip meltblowing process equipment having a 0.229 cm (0.090 inch) recess and a 0.17018cm (0.067 inch) air gap.The equipment was operated under the following conditions: die zone temperature about 282.2°C (about 540°F). die polymer melt temperature about 279.4°C (about 535°F), barrel pressure 3999 kPa (580 psig) die pressure 1310 kPa (190 psig), polymer throughtput 0.90 kg (2 lb.) per hour, forming drum vacuum about 5.08 cm (about 2 in) of water, horizontal forming distance about 30.4 cm (about 12 in.), vertical forming distance about 30.4 cm (aabout 12 in.) and winder speed about 5.8 m/min. (19 ft/min). An elastic web of meltblown fibers was formed having a basis weight of about 105 grams per square meter. The sheet was tested on the Instron Model 1122 Universal Testing Instrument and the results are given in Tables 1 and 2 under the heading "Elastomer." Data collected in the last cycle (i.e. "to 176%") for the elastic sheet control material was read at the break elongation for the composite elastic necked-bonded material shown as 176% at Table 2 in the "To Break" column and the "perm.set" row for "Composite 1".

### Composite Elastic Neck-Bonded Material

The neckable spunbond polypropylene material having a basis weight of 27. g/m² (0.8 osy) and an initial width of about 45 cm (about 17.75 in.) was unwound on a 22 inch Face Coating Line rewinder" made by the Black Clawson Co. The wind-up speed was set at about 1.219 to 1.524 m/mm (about 4 to about 5 ft/min) and the unwind resistance force was set at 330.9 kPa (48 lb. per sq. in.) causing the material to neck or constrict to a width of about 21.6 cm to about 22 cm (about 8.5 to about 8.75 in.) as it was wound on a roll.

At the wind-up roll, the elastic sheet of meltblown fibers described above having a basis weight of about 105 grams per square meter, was overlaid on the tensioned, necked material so that the two webs wound together on the wind up roll. The elastic sheet had a thin plastic film on one surface so it would stick to only one adjacent tensioned, necked layer of material.

The tightly wound roll was unwound and bonded using an engraved calender roller having the pattern shown in Fig. 5. The bond pattern of the engraved roller had approx. 11.6 pins or bond points per sq. metger (approx. 75 pins or bond points per sq.in.) Each pin had a diameter of about 0.2 cm (about 0.059 in) to procuce bond area of about 20.5 %. The bond rollers were maintained at room temperature about 24°C (about 75°F) bond pressure was set at about 137.9 kPa (about 20 lb. per sq. in.) and the line was operated at a speed of from about 2.1 to about 3.04 m (about 7 to 10 ft.) per min.

The composite elastic neck-bonded material was tested on the Instron Model 1122 Universal Testing Instrument and the results are given in Tables 1 and 2 under the heading "Composite 1".

### Comparative Example 1

### Reversibly Necked Spunbonded Material

The neckable spunbonded polypropylene material described above having a basis weight of 27 g/m² (0.8 osy) and an initial width of about 45 cm (17.75 in.) was unwound on a "22 inch Face Coating Line rewinder" made by the Black Clason Co. The wind-up speed was set at about 1.2 to about 1.5 m (about 4 to about 5 ft) per minute and the unwind resistance force was set at 330.9 kPa (48 lb. per sq. in.) causing the material to neck or constrict to a width of about 21.6 to 22.2 cm (about 8 1/2 to 8 3/4 in.) as it was rewoud on a roll. The roll of necked material was heated in a Fischer Econotemp™ Lab Oven Model 30F at 120°C for 1 hour which was thought to be more than the amount of time required to heat the entire roll, i.e., the center of the roll, to the oven temperature for about 300 seconds. This heat treatment formed a reversibly necked material from the neckable material. The reversibly necked material was tested on the Instron Model 1122 Universal Testing Instrument and the results are reported in Tables 1 and 2 under the heading "Heat Set." Necking and heat treating the neckable spunbonded material decreased most tensile properties but increased the cross-machine direction stretch.

Properties of the reversibly necked material are shown in Tables 1 and 2 under the heading of "Heat Set". It can been seen by comparing the "Composite 1" with the "Elastomer 1" from the Tables that the necked layer of the composite elastic material appears to act as a positive stop, that is, a peak load of 0.2 (1.69) for "composite l" compred to 0.06 (0.43) for "Elastomer 1" at the break elongation of "Composite 1" (176%). The elastic layer lowers the normalized grab tensile strength data of the composite elastic necked-bonded material because the elastic layer adds weight but little strength, especially in the machine direction since the necked material has a low elongation to break in that direction. Permanent set is significantly lower in the composite elastic necked-bonded material than in the reversibly necked material.

### Example 2

### Neckable Spunbonded Material

A neckable spunbonded polypropylene material having a basis weight of about 13.56 g/m² (about 0.4 osy) was tested on an Instron Model 1122. Universal testing Instrument. The results are reported in Table 3 under the heading "Control 2".

### Elastic Sheet

An elastic sheet of meltblown fibers as described in Example 1 and having a basis weight of about 70 grams per square meter was tested on an Instron Model 1122 Universal Testing Instrument. This elastic sheet had a plastic film on one surface to prevent the rolled-up material from sticking together. The results are reported in Tables 3 and 4 under the heading "Elastomer 2".

### Composite Elastic Necked-Bonded Laminate

The neckable spunbonded polypropylene material and the elastic sheet of meltblown fibers were joined on a heated bonder roller arrangement.

The bonder speed was set at 6.4 m/min (21 ft/min) nip pressure was 621.2 n/cm (355 pounds per lin.in.) and the calender roller and anvil roller temperatures were set at 52.7 °C (127 ° F. The elastic sheet was unwound from a supply roll at a rate of 6.4 m/min (21 ft /min) so there would be no tensioning of the elastic sheet. The neckable spunbonded polypropylene material was unwound from a supply roll at a rate of about 17 feet per minute or about 20 percent slower than the bonder. The difference in speed created a tension which caused the neckable material to neck before it was joined to the elastic sheet.

The composite elastic necked-bonded material produced in this manner was tested on the Instron Model 1122 Universal Testing Instrument and the results are given in Tables 3 and 4 under the heading "Composite 2". Compared to the Control material, the composite elastic necked-bonded material has lower tensile properties with equivalent machine direction stretch and significantly greater cross-machine direction stretch. Compared to the elastic sheet, the laminate has lower values for Peak Total Energy Absorbed (PTEA) but higher Peak Loads when going to break.

In cross-machine direction cycling (Table 4), the laminate has slightly lower PTEA, slightly greater Peak Load and equivalent values for permanent set. When taken to the break elongation for the laminate, the laminate has higher PTEA and Peak Load values than the elastomeric material.

### Example 3

A composite elastic necked-bonded material was prepared by joining a layer of the neckable spunbonded polypropylene material of Example 2 to each side of the elastic meltblown sheet of Example 2.

The neckable spunbonded polypropylene material and the elastic meltblown sheet were joined utilizing a heated bonder roller arrangement. The bonder speed was set at 6.4 m/min (21 ft/min) nip pressure was 621 N/cm (355 lb./lin.in.) and the calender roller and anvil roller temperatures were set at 53 °C (127°F). The elastic sheet unwind was set at 6.4 m|min (21 ft|min) so there would be no tensioning of the elastic web. The neckable spunbonded polypropylene material unwinds were manually braked and were unwound at about 5.4 m|min (about 18 ft|min).

The composite elastic necked-bonded material produced in this manner was tested on the Instron Model 1122 Universal Testing Instrument. Results for the Grab Tensile Test for the Control materials and the composite elastic material are given in Table 5 under the respective headings "Control 3" and "Composite 3A". Compared to the neckable spunbonded control material, all Grab Tensile Test results were lower for the composite elastic material except for the machine direction elongation which remained unchanged and the cross-machine direction elongation which is significantly increased. Compared to the elastic sheet, the composite elastic necked-bonded material has lower values for Peak Total Energy Absorbed and Elongation but greater values for Peak Loads. Table 6 shows the cross-machine direction stretching for the Elastomer 2 and Composite 3A demonstrating considerably greater Peak TEA and Peak Load during the final cycle.

### Comparative Example 3

A composite elastic material was prepared in which a layer of the neckable spunbonded polypropylene material of Example 2 was joined to each side of the elastic meltblown sheet of Example 2 except that the neckable material was not necked.

The neckable spunbonded polypropylene material and the meltblown elastic sheet were joined utilizing a heated bonder roller arrangement. the bonder speed was set at 6.4 m|min (21 ft|min) nip pressure was 621 N|cm (355 lb.|lin.in.) and the calender roller and anvil roller temperatures were set at 53°C (127°F). The elastic sheet unwind was set at 6.4 m|min (21 ft|min.) so there would be no tensioning of the elastic web. The neckable spunbonded polypropylene materials were unwound at about 6.4 m|min (21 ft.|min). No force was applied to brake any of the unwinds. Consequently, the neckable spunbonded materials were not necked and the elastic sheet was not stretched.

Consequently, the neckable spunbonded materials were not necked and the elastic sheet was not stretched.

The composite elastic material produced in this manner was tested on the Instron Model 1122 Universal Testing Instrument and the results are given in Table 7 under the heading "Composite 3B". When compared to Composite 3A produced with the same materials at the same process conditions except that the spunbonded sheets were necked in for Composite 3A, properties were not changed much except the cross-machine direction elongation was significantly increased.

### Example 4

A neckable spunbonded polypropylene material was necked in two stages and then joined to each side of an elastic meltblown sheet utilizing a thermal bonder to produce a composite elastic necked-bonded material.

Two rolls of a neckable spunbonded polypropylene material having a basis weight of about 13.5 g|m² (about 0.4 osy) and an initial width of about 81.2 cm (about 32 in) were wound on a Camachine 10 rewinder made by Cameron Machine Co. of Brookland, NY. The wind-up roll was operated at a speed of about 12.8 m|min. (about 42 ft|min) and the unwind roll operated at a speed of about 10.6 m|min (35 ft.|min) causing the material to neck to a width of about 45.7 cm (about 18 in.).

The two rolls of neckable spunbonded polypropylene having a necked width of about 45.7 cm (about 18 in.) were run through the "22 inch Face Pilot Coating Line" made by the Black-Clawson Compnay, Fulton, New York. The unwind roll was operated at a sped of about 1.4 m|min (about 5 ft|min) and the winder operated at a speed of from about 1.5 to about 2.4 m|min (5 to about 8 ft|min to further neck the spunbonded material to a final width of about 34.2 to 35.5 (about 13.5 to about 14 in.) The two rolls of necked spunbonded material were put on the top and bottom positions of a three position roll unwind apparatus. The roll of elastic meltblown sheet from Example 2 was placed on the middle position.

The necked spunbonded material and the elastic meltblown sheet were joined utilizing a heated bonder roller arrangement. The bonder speed was set at 5.4 m|min (18 ft|min) nip pressure was 621 N|cm (355 lb.|lin in.) and the calender roller and anvil roller temperatures were set at 52.7°C (127°F) The elastic sheet unwind was set at 6.4 m|min (21 ft|min) so there would be no tensioning of the elastic web. The necked spunbonded material unwinds were set at about 5.8 m|min. (about 19 ft|min) so that enough tension was created to keep the necked spunbonded material in the necked condition.

The composite elastic necked-bonded material produced in this manner was tested on the Instron Model 1122 Universal Testing Instrument and the results are given in Tables 8 and 9 under the heading "Composite 4". Compared to the elastic sheet, the composite elastic material has lower values for machine direction stretch and Peak Total Energy Absorbed and considerably higher peak load values (Table 8). Cycling values (Table 9) showed little change except at the breaking point of the composite elastic material where the peak load was about 5 times that of the pure elastomer.

### Example 5

### Composite Elastic Neck-Bonded Material Having a Meltblown Elastic Layer Formed Directly on a Necked Material

A neckable spunbonded polypropylene material having a basis weight of about 27 g|m² (about 0.4 osy) was unwound from a braked unwind roll at a speed of approximately 4.8 m|min (approx. 16 ft|min) and fed on to the forming drum of a meltblowing apparatus operating at a rate of 6.0 m|min (20 ft.|min). The difference in speed caused the material to constrict to about 35 percent of its original width.

A pressure sensitive elastomer adhesive web of meltblown fibers having a basis weight of about 40 grams per square meter was formed directly on the tensioned, necked material. The meltblown fibers were formed from a blend of about 63% by weight KRATON G-1657, 20% polyethylene NA-601 and 17% REGALREZ 1126 having a melt flow of about 15 grams per ten minutes when measured at 190°C and under a 2160 gram load; an elongation of about 750%; a modulus of elongation at 100% of about 1206.5 kPa (about 175 psi), and a modulus of elongation at 300% of about 225 psi utilizing meltblowing equipment having a 0.23 cm (0.09 in) recess and a 0.17 cm (0.067 in.) air gap die tip arrangement. The meltblowing process equipment operated under the following conditions: die zone temperature about 260°C (500°F) , die polymer melt temperature about 256 °C (about 493°F), barrel pressure 2206 kPa (320 psig), die pressure 1041. kPa (151 psig), polymer throughput 0.4 kg|h(0.9 lb|hr) forming drum vacuum about 7.0 cm (3 in.) of water, horizontal forming distance about 30. cm (about 12 in.) vertical forming distance about 35 cm (14 in.) and a winder süeed abpit 6. m|min (20 ft|min).

The composite elastic neck-bonded material formed in this manner was tested on an Instron Model 1122 Universal Testing Instrument. The results are reported in Tables 10 and 11 under the heading "Meltblown Laminate."

### Comparative Example 5

A neckable spunbonded polypropylene material having a basis weight of about 13 g|m² (about 0.4 osy) was joined to an elastic web of meltblown fibers having a basis weight of about 70 grams per square meter utilizing a heated bonder roller arrangement according to the procedure of Example 2. The bonder speed was set at 6.4 m|min (21 ft|min) nip pressure was 621. N|cm (355 lb.|in.) and thecalender roller and anvil roller temperatures were set at 53°C (127°F). The elastic web unwind was set at 6.4 m|min (21 ft|min.) so that so that there would be no tensioning of the elastic web. The spunbonded polypropylene web unwind was set at 6 m|min (21 ft|min) but force was applied to the unwind brake so the unwind operated at about 5 m|min. (about 17 ft|min) or about 20 percent slower than the bonder.

The composite elastic necked-bonded material produced in this manner was tested on the Instron Model 1122 Universal Testing Instrument and the results are given in Tables 10 and 11 under the heading "Composite 5".

Because the elastic component of the thermally bonded composite material had a basis weight that was approximately 50 percent greater than the basis weight of the elastic component of the meltblown composite material, the values for Peak Total Energy Absorbed in the Grab Tensile Tests, and the Peak Total Energy Absorbed and Peak Load for cycling are considerably higher than the meltblown composite material. When taken "to Break", the peak loads are similar because of the contribution by the necked spunbonded material.

### Example 6

A neckable spunbonded polypropylene material having a basis weight of about 13.5 g|m²(about .4 oz| sq.yd) and an initial width of about 101 cm (about 40 in) was necked to a width of about 48 cm (19 in.) and run under a film extrusion apparatus at a rate of 40 m|min (130 ft|min). A film was formed from a blend of about 63% by weight KRATON G-1657, 20% polyethylene NA-601 and 17% REGALREZ 1126. Added to the blend was about 2 percent by weight Ampacet White concentrate Type 41171 Titanium Dioxide (TiO₂) pigment available from the Ampacet Corporation, Mt. Vernon, New York. The blend had a melt flow of about 15 grams per ten minutes when measured at 190°C and under a 2160 gram load; an elongation of about 750%, a modulus of elongation at 100% of about 1206 kPa (about 175 psi) and a modulus of elongation at 300µ of about 1553 kPa (about 225 psi) and was extruded on the spunbonded polypropylene web at a rate of about 0.96 kg|cm|hr (about 5.4 lb. per in. per hr). The thickness of the extruded film was about 0.0254 mm (about 1 mil).

The composite elastic necked-bonded material produced in this manner was tested on the Instron Model 1122 Universal Testing Instrument and the results are given in Tables 12 and 13 under the heading "Composite 6". The test results of the composite material formed by meltblowing an elastic web onto the tensioned, necked material (Example 5) are also shown in the tables for comparison. The KRATON G film appears to give much more strength to the composite elastic necked-bonded material than the elastic web of meltblown fibers. It can be seen that the values for the cycling Peak Total Energy Absorbed and Peak Load are from 400 to 500 % greater for tne material having the 0.0254 mm (1 mil) extruded elastic film than for the material having a meltblown web. The values measured "to Break" are about 50 to 100 percent greater for the material having the 1 mil extruded film than for the material having a meltblown web.

### Example 7

Two neckable webs of spunbonded polypropylene having basis weights of about 13.5 g|m² (about 0.4 osy) were joined to each side of an elastic meltblown web according to the procedure of Comparative Example 3. The neckable material remained un-necked and the resulting composite material was not a composite elastic necked-bonded material. The neckable spunbonded polypropylene material and the composite material were tested on the Instron Model 1122 Universal Testing Instrument and the results are given in Table 14 under the respective headings Control 7A, Control 7B, Composite 7, and Normalized Composite 7.

The test results normalized for the total basis weight show that the composite material formed in this manner is much weaker than the neckable spunbonded materials, that is, Composite 7 versus Control 7A and 7B. However, if the test results are normalized to eliminate the weight contribution of the elastic meltblown web, the test results for the composite material are comparable to the neckable spunbonded materials, that is, Spunbond Normalized Composite 7 versus Control 7A and 7B. In view of these results, the elastic layer makes little contribution to the measured Grab Tensile Test properties of the composite material when the composite material has a maximum elongation that is much less than the elongation of the elastic material.

### Film Extrusion Examples

The composite elastic necked-bonded materials of examples 8-20 were made by extruding a film of elastomeric polymer onto at least one tensioned, necked material and immediately applying pressure to bond the film and the tensioned, necked material together.

The samples were cycled on a Sintech 2 computerized system for material testing available from Sintech, Inc. of Stoughton, Massachusetts, and the results reported in Tables 15-17. The jaw faces of the tester were 2.54 cm (1 in.) by 7.62 cm (3 in.) so the samples were cut to 7.6 cm (3 in.) widths. A 10 cm (4 in.) gauge length was used. Crosshead speed was set for 500 millimeters per minute and the unit was zeroed, balanced and calibrated according to the standard procedure. The maximum extension limit for the cycle length was set at 100 percent elongation. The samples were cycled to 100 percent elongation two times and then were taken to 2000 grams load on the third cycle to measure elongation at that particular load. The test equipment was set to report Load in grams force and Elongation in percent. The load results of the cycle tests have been proportionally adjusted for a measured film basis weight of 50 grams per square meter (gsm).

Adhesion between the film and the tensioned, necked material(s) was determined utilizing a conventional cohesion tester equipped with a conventional force gage. Sample size was 5.08 cm (2 in.) by 10. cm (4 in) and samples were held in place with Scotch Brand Double coated Pressure Sensitive No. 406, 5. cm (2 in.) wide tape. The middle one sq. in. of the sample was tested. Results of cohesion testing are reported in units of kilograms force per 1 sq.in. in parenthesis, and have been converted into units of kg. per cm squared.

### Examples 8-12

Two reversibly necked spunbonded polypropylene webs were unwound from separate supply rolls. One web had a basis weight of about 43 grams per square meter. The other web had a basis weight of about 47 grams per square meter. The reversibly necked spunbonded polypropylene webs were pre-necked and heat treated so the webs would maintain their necked condition. Both webs were adapted to stretch about 150 percent in the cross-machine direction (i.e., to about 250 percent of their unstretched necked width).

The webs were continuously advanced in a configuration such that they would intersect and create a contact zone. This contact zone was located just below a conventional film extrusion apparatus. The apparatus included a 8.8 cm (3.5 in.) single screw extruder available from Hexco, Inc. of Addison, Illinois. The extruder was equipped with an Ultraflex H-40 extrusion die available form Extrusion Dies, Chippewa Falls, WI. The die lip opening was set at 0.5 mm (20 mil). The distance between the die tip and the contact zone was set so that the extruded film contacted the tensioned, necked material in less than about 1 second at conventional extrusion rates.

A film was formed from a blend of about 63% by weight KRATON G-1657, 20% polyethylene NA-601 and 17% REGALREZ 1126. The extruder was operated so that the deposited film had a basis weight of about 50 grams per square meter. The two webs of tensioned, necked material sandwiched the extruded film forming a multilayer material. The multilayer material immediately passed into the pressure nip formed by two pressure rolls. One pressure roll was rubber coated. The other roll was chilled to a temperature of about 20°C (50°F) Both of the rolls were smooth.All of the Examples were prepared utilizing the smooth rolls. The basis weight of the elastic film in Example 8 was 47 gsm.

A single layer of 0.228 mm (9 mil) tape was wrapped on each edge of the rubber coated roll to create a small gap between the pressure rolls. Generally speaking, the gap was less than .228 mm (9 mils) due to compression of the tape and of the rubber roll. Example 9 was prepared according to the procedure described above and utilizing the single wrap of tape on the rubber pressure roll. The basis weight of the elastic film in Example 9 was 50 gsm.

A second layer of 0.228 mm (9 mil) tape was wrapped on each edge of the rubber coated roll to create a larger gap. Generally speaking, the gap was less than 0.5 mm (18mil) i.e. 2 layers of 0.228 mm (9 mil) tape due to compression of the tape and of the rubber roll. Example 10 was prepared according to the procedure described above and utilizing the double wrap of tape on the rubber pressure roll. The basis weight of the elastic film in Example 10 was 47 gsm.

A third layer of 0.228 mm (9 mil) tape was wrapped on each edge of the rubber coated roll to create a larger gap. Generally speaking, the gap was less than 0.7 mm (27 mil) i.e. 3 layers of 0.228 mm (9 mil) tape due to compression of the tape and of the rubber roll. Example 11 was prepared according to the procedure described above and utilizing the triple wrap of tape on the rubber pressure roll. The basis weight of the elastic film in Example 11 was 48 gsm.

A fourth layer of nine (9) mil tape was wrapped on each edge of the rubber coated roll to create a larger gap. Generally speaking, the gap was less than 0.9mm (36 mil) i.e. 4 layers of 0.228 mm (9 mil) tape due to compression of the tape and of the rubber roll. Example 12 was prepared according to the procedure described above and utilizing the quadruple wrap of tape on the rubber roll. The basis weight of the elastic film in Example 12 was 48 gsm.

The composite elastic necked-bonded materials produced for Examples 8-14 were tested on the Sintech Instrument and the results are given in Table 15 at 30 percent elongation on the first cycle pull.

### Examples 13-14

Composite elastic necked-bonded materials were prepared according to the procedure described for Examples 8-12 except that a controlled gap was created between the pressure rolls utilizing two set screws. The gap setting between the pressure roll was maintained by applying pressure to each of the two closing arms that move one of the pressure rolls towards the other. The gap setting was measured at each end of the pressure rolls utilizing feeler gages.

The basis weight of the elastic film in Example 13 was 46 gsm. The basis weight of the elastic film in Example 14 was 47 gsm.

The composite elastic necked-bonded materials produced for Examples 13 and 14 were tested on the Sintech Instrument and the results are given in Table 16.

### Examples 15-20

Composite elastic necked-bonded materials were prepared according to the procedure described for Examples 13-14 except that the reversibly necked spunbonded polypropylene webs each had a basis weight of about 41 grams per square meter and were adapted to stretch about 110 percent in the cross-machine direction (i.e., to about 210 percent of their necked width).

The basis weight of the elastic film in Example 15-20 were as follows:

| EXAMPLE | BASIS WEIGHT (gsm) KRATON® FILM |
|---|---|
| 15 | 47.5 |
| 16 | 51.3 |
| 17 | 51.3 |
| 18 | 44.6 |
| 19 | 51.3 |
| 20 | 51.3 |

The composite elastic necked-bonded materials produced for Examples 15-20 were tested on the Sintech Instrument and the results are given in Table 17.

As can be seen from Tables 15-17, Example 8 was prepared utilizing a pressure roll arrangement with a pressurized nip such that the rolls were essentially in contact in the absence of material. Load (measured in grams force) on the first pull to 30% stretch was significantly higher than the loads measured for material prepared when an appreciable controlled gap was maintained between the pressure rollers. Generally speaking, the response of the composite elastic necked-bonded material to an elongation force was changed by adjusting the gap setting between the pressure rollers.

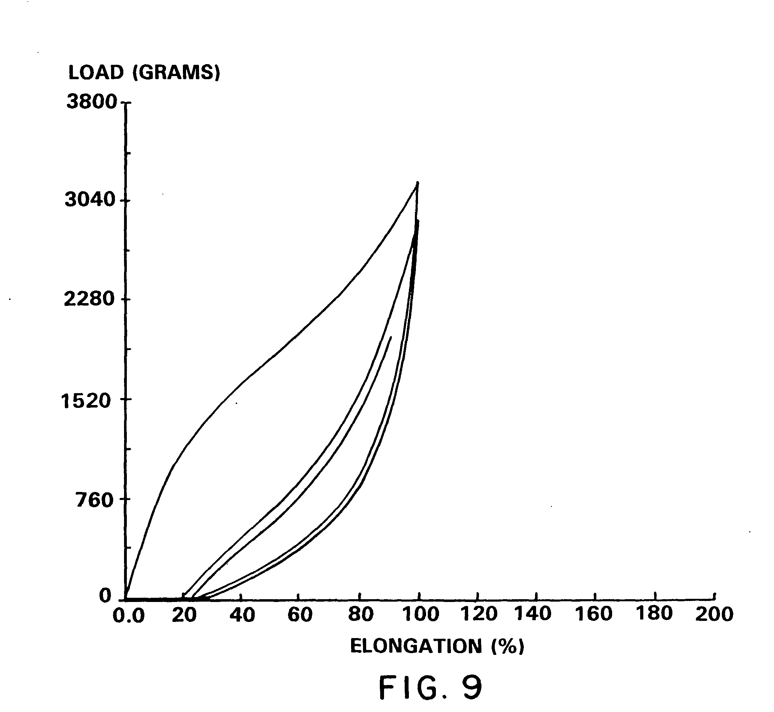

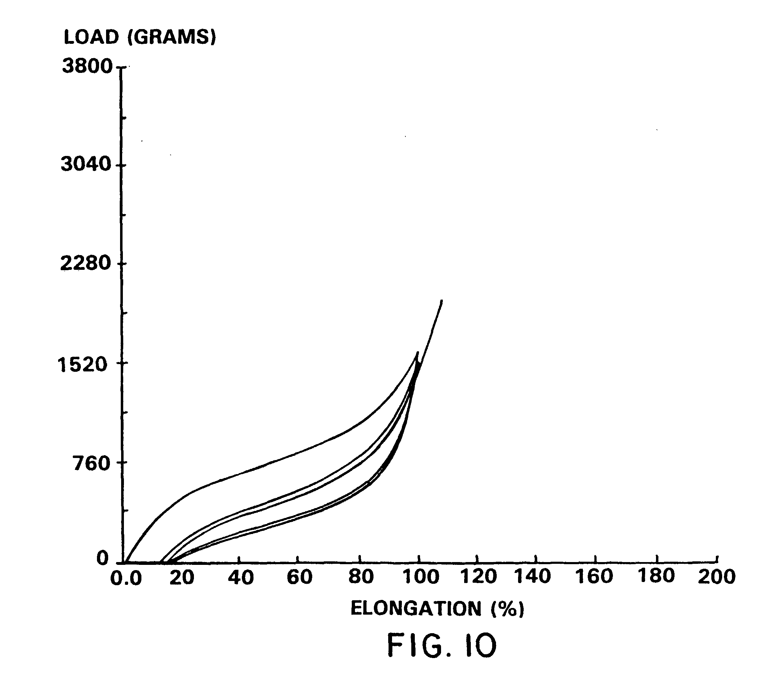

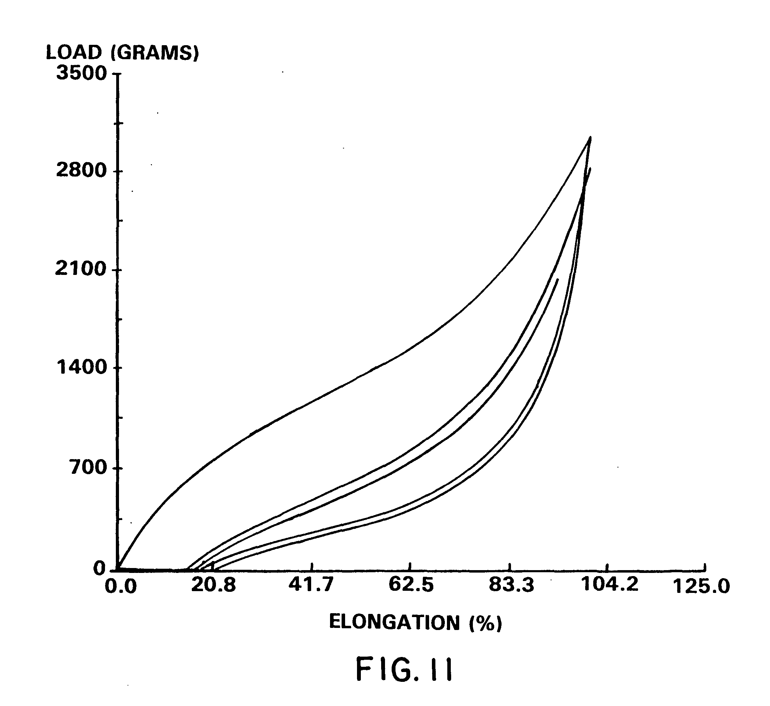

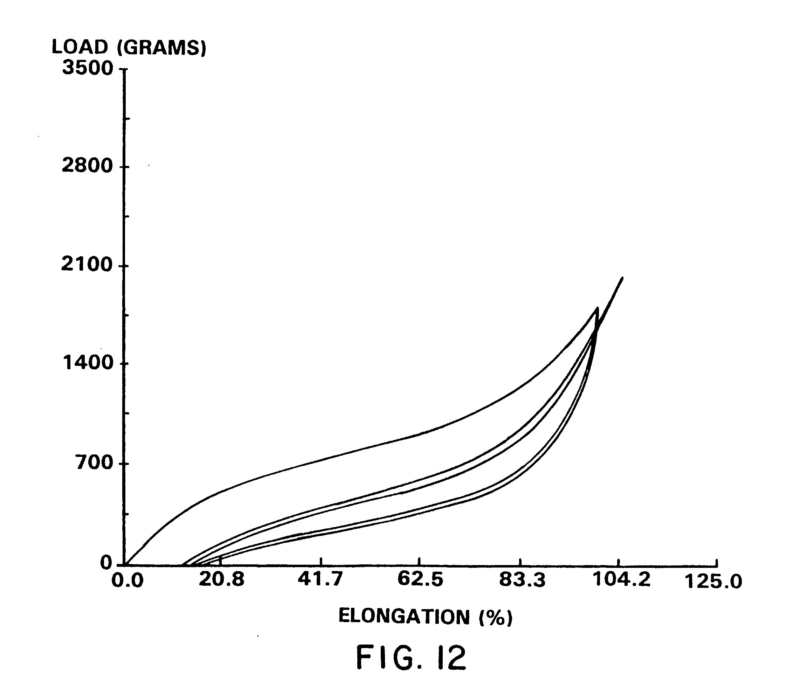

For example, FIG. 9 represents a stress-strain curve (hysteresis loop) measured for Example 8 which was prepared with a pressurized nip set so there was essentially no gap. FIG. 10 represents a stress-strain curve measured for Example 14 which was prepared utilizing a 0.6 mn (25 mil) gap setting. A comparison of Fig.9 with Fig.10 reveals lower levels of load (i.e., stress) during elongation for the material preparing. utilizing a 0.635 mm (25 mil) gap setting. Fig.11 represents a stress strain curve measured for Example 15 which was prepared utilizing a 0.254 mm (10 mil) gap setting. Fig.12 represents a stress-strain curve measured for Example 19 which was prepared utilizing a 0.889 mm (35 mil) gap setting. A comparison of FIG. 9 with FIGS. 11 and 12 reveals lower levels of load (i.e., stress) during elongation for the materials prepared utilizing gap settings of

The change in response of the composite elastic necked-bonded material to an elongation force caused by adjusting the gap setting between the pressure rollers is further highlighted in Table 18. Data in Table 18 show a comparison between the load (i.e. force) measured during the first pull to 30% stretch for samples prepared at various gap settings. As can be seen, increasing the gap setting generally decreased the load measured during the first pull to 30% stretch by about 20%, 40%, even 50% or more. The data also show that decreasing the gap setting generally increased the load measured during the first pull to 30% stretch. For example, the load measured during the first pull to 30% stretch for Example 8 is over twice as great as that measured for Example 19.

This application is one of a group of commonly assigned patent applications which are being filed on the same date. The group includes application Serial No. 07/249,050 (U.S. Patent No. 4,965,122) in the name of Michael T. Morman and entitled "Reversibly Necked Material and Process to Make It"; and application Serial No. 07/248,833 (U.S. Patent No. 4,981,747) entitled "Composite Elastic Material INcluding a Reversibly Necked Material" and also in the name of Michael T. Morman. The subject matter of these applications is hereby incorporated herein by reference.

**TABLE 1**

| GRAB TENSILES: | | |
|---|---|---|
| | Control 1 | Heat Set |
| MD TEA | 5.42 ± .57 (1.05 ± .11) | 1.29 ± .1 (.25 ± .02) |
| MD Peak Load | 2.073 ± .164 (15.8 ± 1.25) | 1.574 ± .394 (12 ± 3) |
| MD Elong | 46 ± 2 | 16 ± 1 |
| CD TEA | 4.6 ± 1.14 (.89 ± .22) | 1.34 ± .31 (.26 ± .06) |
| CD Peak Load | 1.73 ± .25 (13.2 ± 1.9) | .49 ± .08 (3.7 ± .6) |
| CD Elong | 50 ± 7 | 143 ± 10 |
| | | |

| | Elastomer 1 | Composite 1 |
|---|---|---|
| MD TEA | 6.3 ± .67 (1.22 ± .13) | .67 ± .15 (.13 ± .03) |
| MD Peak Load | 1.36 ± .09 | 2.8 ± .24 |
| MD Elong | 581 ± 40 | 30 ± 3 |
| CD TEA | 4.34 ± 1.03 (.84 ± .2) | 1.65 ± .21 (.32 ± .04) |
| CD Peak Load | .12 ± .02 (.93 ± .12) | .22 ± .03 (1.66 ± .22) |
| CD Elong | 574 ± 95 | 204 ± 11 |

**TABLE 2**

| CYCLE: | 1 | 2 | 3 | 4 | To Break |
|---|---|---|---|---|---|
| Control 1, Cycled in the cross-machine direction at 38% CD elongation | | | | | |
| Peak TEA | 4.81 ± .1 (.932 ± .02) | 1.45 ± .05 (.28 ± .01) | 1.24 ± .03 (.24 ± .005) | 1.08 ± .05 (.21 ± .01) | 2.58 ± 1.34 (.50 ± .26) |
| Peak Load | 1.81 ± .03 (13.8 ± .2) | 1.55 ± .04 (11.8 ± .3) | 1.44 ± .01 (11.0 ± .1) | 1.36 ± .04 (10.4 ± .3) | 1.81 ± .22 (13.8 ± 1.7) |
| Perm. Set | 45. ± 3 | 49 ± 2 | 53 ± 1 | 55 ± 1 | 45 ± 4 |
| | | | | | |

| Heat Set, Cycled in the cross-machine direction at 80% CD elongation | | | | | |
|---|---|---|---|---|---|
| Peak TEA | .072 ± .005 (.014 ± .001) | .021 ± .005 (.004 ± .001) | .01 ± .005 (.002 ± .001) | .010 ± .005 (.002 ± .001) | 1.911 ± .62 (.37 = .12) |
| Peak Load | .028 ± .001 (.21 ± .01) | .025 ± .001 (.19 ± .01) | .024 ± .001 (.18 ± .01) | .024 ± .001 (.18 ± .01) | .533 ± .085 (4.06 ± .65) |
| Perm. Set | 22 ± 1 | 25 ± 1 | 28 ± 1 | 37 ± 3 | 143 ± 7 |
| | | | | | |

| Composite 1, Cycled in the cross-machine direction at 109% CD elongation | | | | | |
|---|---|---|---|---|---|
| Peak TEA | .52 ± .05 (.10 ± .01) | .31 ± .03 (.06 ± .005) | .31 ± .03 (.06 ± .005) | .27 ± .03 (.053 ± .005) | 1.47 ± .21 (.285 ± .04) |
| Peak Load | .069 ± .01 (.528 ± .08) | .063 ± .008 (.48 ± .06) | .062 ± .007 (.47 ± .05) | .06 ± .008 (.46 ± .06) | .222 ± .026 (1.69 ± .2) |
| Perm. Set | 9 ± 1 | 10 ± .5 | 11.2 ± 1 | 11.4 ± 3 | 176 ± 12 |
| | | | | | |

| Elastomer 1, Cycled in the cross-machine direction at 109% CD elongation | | | | | |
|---|---|---|---|---|---|
| Peak TEA | .392 ± .005 (.076 ± .001) | .289 ± .005 (.056 ± .001) | .279 ± .005 (.054 ± .001) | .269 ± .005 (.052 ± .001) | To 176% (.13 ± .01)(N=2) .671 ± .052 |
| Peak Load | .0451 ± .0005 (.344 ± .004) | .0433 ± .0005 (.33 ± .004) | .0420 ± .0004 (.32 ± .003) | .0416 ± .0005 (.317 ± .004) | (.43 ± .01)(N=2) .0564 ± .0013 |
| Perm. Set | 8 ± 0 | 9 ± 0 | 10 ± 0 | 10.8 ± .4 | |

**TABLE 3**

| GRAB TENSILES: | | |
|---|---|---|
| | Control 2 | Composite 2 |
| MD TEA | 4.96 ± 1.24 (.96 ± .24) | 1.81 ± .26 (.35 ± .05) |
| MD Peak Load | 1.99 ± .36 (15.2 ± 2.75) | .60 ± .03 (4.57 ± .2) |
| MD Elong | 42.5 ± 6 | 50 ± 5 |
| CD TEA | 5.58 ± 1.96 (1.08 ± .38) | 2.79 ± .77 (.54 ± .15) |
| CD Peak Load | 1.85 ± .35 (14.1 ± 2.7) | .32 ± .04 (2.45 ± .3) |
| CD Elong | 53 ± 8 | 217 ± 23 |
| | | |

| | Elastomer 2 | |
|---|---|---|
| MD TEA | 5.78 ± 1.76 (1.12 ± .34) | |
| MD Peak Load | .2 ± .02 (1.54 ± .17) | |
| MD Elong | 427 ± 93 | |
| CD TEA | 4.29 ± .15 (.83 ± .03) | |
| CD Peak Load | .16 ± .007 (1.22 ± .05) | |
| CD Elong | 407 ± 17 | |

**TABLE 4**

| CYCLE: | 1 | 2 | 3 | 4 | |
|---|---|---|---|---|---|
| Elastomer 2, Cycled in the cross-machine direction at 129% CD elongation | | | | | |
| Peak TEA | .878 ± .031 (.17 ± .006) | .568 ± .021 (.11 ± .004) | .516 ± .021 (.10 ± .004) | .516 ± .021 (.10 ± .004) | To 235% (.33 ± .03) 1.704 ± .155 |
| Peak Load | .047 ± .003 (.60 ± .02) | .072 ± .003 (.55 ± .02) | .071 ± .003 (.54 ± .02) | .069 ± .003 (.53 ± .02) | (.765 ± .06) .1 ± .008 |
| Perm. Set | 8 ± 0 | 10 ± .5 | 11 ± .5 | 13 ± 2 | |
| | | | | | |

| Composite 2, Cycled in the cross-machine direction at 122% CD elongation | | | | | |
|---|---|---|---|---|---|
| Peak TEA | .795 ± .103 (.154 ± .02) | .444 ± .052 (.086 ± .01) | .403 ± .052 (.078 ± .01) | .382 ± .026 (.074 ± .005) | To Break (.72 ± .15) 3.724 ± .775 |
| Peak Load | .126 ± .034 (.96 ± .26) | .112 ± .028 (.854 ± .21) | .108 ± .028 (.82 ± .21) | .104 ± .026 (.79 ± .20) | (2.74 ± .38) .359 ± .5 |
| Perm. Set | 9 ± 1 | 11 ± 1 | 13 ± 2 | 14 ± 2 | 218 ± 24 |

**TABLE 5**

| GRAB TENSILES: | | |
|---|---|---|
| | Control 5 | Composite 3A |
| MD TEA | 4.96 ± 1.24 (.96 ± .24) | 1.76 ± .31 (.34 ± .06) |
| MD Peak Load | 1.99 ± .36 (15.2 ± 2.75) | .62 *±* .08 (4.7 ± .6) |
| MD Elong | 42.5 ± 6 | 55 ± 4 |
| CD TEA | 5.58 ± 1.96 (1.08 ± 0.38) | 2.48 ± .41 (.48 ± .08) |
| CD Peak Load | 1.85 ± .35 (14.1 ± 2.7) | .56 ± .05 (4.3 ± .4) |
| CD Elong | 53 ± 8 | 97 ± 8 |

| | Elastomer 2 | |
|---|---|---|
| MD TEA | 5.78 ± 1.76 (1.12 ± .34) | |
| MD Peak Load | .2 ± .02 (1.54 ± .17) | |
| MD Elong | 427 ± 93 | |
| CD TEA | 4.29 ± .15 (.83 ± .03) | |
| CD Peak Load | .16 ± .007 (1.22 ± .05) | |
| CD Elong | 407 ± 17 | |

**TABLE 6**

| CYCLE: | | 1 2 | 3 | 4 | |
|---|---|---|---|---|---|
| Elastomer 2, Cycled in the cross-machine direction at 60% CD elongation | | | | | |
| Peak TEA | .346 ± .01 (.067 ± .002) | .248 ± .01 (.048 ± .002) | .238 ± .005 (.046 ± .001) | .232 ± .01 (.045 ± .002) | To 90% (.103 ± .002) |
| Peak Load | .073 ± .001 (.553 ± .01) | .068 ± .002 (.517 ± .012) | .066 ± .001 (.50 ± .01) | .066 ± .001 (.50 ± .01) | .532 ± .01 (.65 ± .01) .085 ± .001 |
| Perm. Set | 7 ± 0 | 8 ± 0 | 8 ± 0 | 9 ± 1 | |
| | | | | | |

| Composite 3A, Cycled in the cross-machine direction at 55% CD elongation | | | | | |
|---|---|---|---|---|---|
| Peak TEA | .98 ± .21 (.19 ± .04) | .42 ± .1 (.082 ± .02) | .36 ± .05 (.07 ± .01) | .34 ± .05 (.065 ± .01) | To Break (.484 ± .06) 2.5 ± .31 |
| Peak Load | .349 ± .046 (2.66 ± .35) | .311 ± .043 (2.37 ± .33) | .294 ± .041 (2.24 ± .31) | .283 ± .037 (2.16 ± .28) | (4.08 ± .35) .535 ± .046 |
| Perm. Set | 18 ± 1 | 20 ± 2 | 22 ± 3 | 24 ± 2 | 91 ± 4 |

**TABLE 7**

| GRAB TENSILES: | | |
|---|---|---|
| | Composite 3B | Composite 3A |
| MD TEA | 2.22 ± .36 (.43 ± .07) | 1.76 ± .31 (.34 ± .06) |
| | | |
| MD Peak Load | .76 ± .07 (5.8 ± .51) | .62 ± .08 (4.7 ± .6) |
| | | |
| MD Elong | 52 ± 6 | 55 ± 4 |
| | | |
| CD TEA | 2.12 ± .46 (.41 ± .09) | 2.48 ± .41 (.48 ± .08) |
| | | |
| CD Peak Load | .69 ± .1 (5.25 ± .75) | .56 ± .05 (4.3 ± .4) |
| | | |
| CD Elong | 55 ± 5 | 97 ± 8 |

**TABLE 8**

| GRAB TENSILES: | | |
|---|---|---|
| | Elastomer 2 | Composite 4 |
| MD TEA | 5.78 ± 1.76 (1.12 ± .34) | 1.7 ± .31 (.33 ± .06) |
| | | |
| MD Peak Load | .2 ± .02 (1.54 ± .17) | .76 ± .06 (5.8 ± .49) |
| | | |
| MD Elong | 427 ± 93 | 48 ± 4 |
| | | |
| CD TEA | 4.29 ± .15 (.83 ± .03) | 3.1 ± .46 (.60 ± .09) |
| | | |
| CD Peak Load | .16 ± .007 (1.22 ± .05) | .407 ± .066 (3.1 ± .5) |
| | | |
| CD Elong | 407 ± 17 | 229 ± 12 |

**TABLE 9**

| CYCLE: | 1 | 2 | 3 | 4 | |
|---|---|---|---|---|---|
| Elastomer 2, Cycled in the cross-machine direction at 129% CD elongation | | | | | |
| Peak TEA | .878 ± 0.31 (.17 ± .006) | .568 ± .021 (.11 ± .004) | .516 ± .021 (.10 ± .004) | .516 ± .021 (.10 ± .004) | To 235% (.33 ± .03) |
| Peak Load | .079 ± .003 (.60 ± .02) | .072 ± .003 (.55 ± .02) | .071 ± .003 (.54 ± .02) | .07 ± .003 (.53 ± .02) | 1.704 ± .155 (.76 ± .06) .1 ± .008 |
| Perm. Set | 8 ± 0 | 10 ± 1 | 11 ± 1 | 13 ± 2 | |
| | | | | | |

| Composite 4, Cycled in the cross-machine direction at 129% CD elongation | | | | | |
|---|---|---|---|---|---|
| Peak TEA | .904 ± .129 (.175 ± .025) | .413 ± .052 (.08 ± .01) | .362 .021 (.07 ± .004) | .362 ± .021 (.07 ± .004) | To Break (.85 ± .07) 4.39 ± .362 |
| Peak Load | .117 ± 0.26 (.89 ± .2) | .101 ± .026 (.77 ± .2) | .093 ± .021 (.71 ± .16) | .091 ± .018 (.69 ± .14) | (3.60 ± .5) .472 ± .066 |
| Perm. Set | 13 ± 1 | 15 ± 1 | 15 ± 1 | 18 ± 1 | 235 ± 14 |

**TABLE 10**

| GRAB TENSILES: | | |
|---|---|---|
| | Composite 5 | Meltblown Laminate |
| MD TEA | 1.81 ± .26 (.35 ± .05) | .88 ± .21 (.17 ± .04) |
| | | |
| MD Peak Load | .6 ± .03 (4.57 ± .21) | .56 ± .05 (4.3 ± .35) |
| | | |
| MD Elong | 50 ± 5 | 24 ± 3 |
| | | |
| CD TEA | 2.79 ± .77 (.54 ± .15) | 1.96 ± .15 (.38 ± .03) |
| | | |
| CD Peak Load | .32 ± .04 (2.45 ± .31) | .31 ± .03 (2.4 ± .2) |
| | | |
| CD Elong | 217 ± 23 | 210 ± 10 |

**TABLE 11**

| CYCLE: | 1 | 2 | 3 | 4 | To Break |
|---|---|---|---|---|---|
| Composite 5, Cycled in the cross-machine direction at 122% CD elongation | | | | | |
| Peak TEA | .795 ± .103 (.154 ± .02) | .444 ± .052 (.086 ± .01) | .403 ± .041 (.078 ± .008) | .382 ± .026 (.074 ± .005) | 3.713 ± .775 (.719 ± .15) |
| Peak Load | .126 .034 (.96 = .26) | .112 ± .028 (.85 ± .21) | .108 ± .028 (.82 ± .21) | .105 ± .026 (.80 ± .20) | .359 ± .052 (2.74 ± .4) |
| Perm. Set | 9 ± 1 | 11 ± 1 | 13 ± 2 | 14 ± 2 | 218 ± 24 |
| | | | | | |

| Meltblown Laminate, Cycled in the cross-machine direction at 119% CD elongation | | | | | |
|---|---|---|---|---|---|
| Peak TEA | .46 ± .052 (.089 ± .01) | .263 ± .026 (.051 ± .005) | .243 ± .021 (.047 = .004) | .232 ± .021 (.045 ± .004) | 2.644 ± .331 (.512 ± .064) |
| Peak Load | .056 ± .005 (.429 ± .04) | .05 ± .005 (.379 ± .04) | .047 ± .004 (.36 ± .03) | .046 ± .004 (.35 ± .03) | .328 ± .018 (2.5 ± .14) |
| Perm. Set | 10 ± 1 | 12 ± 1 | 13 ± 1 | 19 ± 6 | 218 ± 10 |

**TABLE 12**

| GRAB TENSILES: | | |
|---|---|---|
| | Meltblown Laminate | Composite 6 |
| MD TEA | .88 ± .21 (.17 ± .04) | 1.45 ± .41 (.28 ± .08) |
| | | |
| MD Peak Load | .56 ± .04 (4.3 ± .35) | .75 ± .05 (5.7 ± .4) |
| | | |
| MD Elong | 24 ± 3 | 34 ± 7 |
| | | |
| CO TEA | 1.96 ± .15 (.38 ± .03) | 4.96 ± .67 (.96 ± .13) |
| | | |
| CD Peak Load | .31 ± .03 (2.4 ± .2) | .51 ± .04 (3.9 ± .3) |
| | | |
| CD Elong | 210 ± 10 | 215 ± 16 |

**TABLE 13**

| CYCLE: | 1 | 2 | 3 | 4 | To Break |
|---|---|---|---|---|---|
| Meltblown Laminate 1, Cycled in the cross-machine direction at 119% CD elongation | | | | | |
| Peak TEA | .465 ± .052 (.09 ± .01) | .263 ± .03 (.051 ± .005) | .243 ± .021 (.047 ± .004) | .232 ± .021 (.045 ± .004) | 2.634 ± .31 (.51 ± .06) |
| Peak Load | .056 ± .005 (.43 ± .04) | .05 ± .004 (.38 ± .03) | .047 ± .004 (.36 ± .03) | .046 ± .004 (.35 ± .03) | .328 ± .018 (2.50 ± .14) |
| Perm. Set | 10 ± 1 | 12 ± 1 | 13 ± 1 | 19 ± 6 | 219 ± 10 |
| | | | | | |

| Composite 6, Cycled in the cross-machine direction at 121% CD elongation | | | | | |
|---|---|---|---|---|---|
| Peak TEA | 2.25 ± .15 (.436 ± .03) | 1.11 ± .05 (.214 ± .01) | 1.03 ± .05 (.20 ± .01) | .98 ± .05 (.19 ± .01) | 4.8 ± .57 (.93 ± .11) |
| Peak Load | .26 ± .039 (1.98 ± .3) | .236 ± 0.038 (1.80 ± .29) | .226 ± .038 (1.72 ± .29) | .219 ± .037 (1.67 ± .28) | .504 ± .028 (3.84 ± .21) |
| Perm. Set | 10 ± 1 | 11 ± 1 | 12 ± 1 | 13 ± 1 | 196 ± 15 |

**TABLE 14**

| GRAB TENSILES: | | |
|---|---|---|
| | Control 7A | Control 7B |
| MD TEA | 4.54 ± 1.34 (.88 ± .26) | 5.42 ± 1.03 (1.05 ± .2) |
| | | |
| MD Peak Load | 2.09 ± .52 (15.9 ± 4) | 1.9 ± .26 (14.5 ± 2) |
| | | |
| MD Elong | 37 ± 5 | 48 ± 7 |
| | | |
| CD TEA | 4.65 ± 1.86 (.90 ± .36) | 6.46 ± 2.07 (1.25 ± .4) |
| | | |
| CD Peak Load | 1.67 ± .39 (12.7 ± 3) | 2.03 ± .34 (15.5 *±* 2.6) |
| | | |
| CD Elong | 51 ± 8 | 55 ± 8 |
| | | |

| | Composite 7 | Spunbond Normalized Composite 7 |
|---|---|---|
| MD TEA | 2.22. ± .36 (.43 ± .07) | 6.87 ± 1.14 (1.33 ± .22) |
| | | |
| MD Peak Load | .76 ± .07 (5.8 ± .51) | 2.36 ± .21 (18 ± 1.58) |
| | | |
| MD Elong | 52 ± 6 | - |
| | | |
| CD TEA | 2.12 ± .46 (.41 ± .09) | 6.96 ± 1.45 (1.27 ± .28) |
| | | |
| CD Peak Load | .69 ± .1 (5.25 ± .75) | 2.14 ± .3 (16.3 ± 2.3) |
| | | |
| CD Elong | 55 ± 5 | |
| | | |

| | Elastomer 2 | |
|---|---|---|
| MD TEA | 5.78 ± 1.76 (1.12 ± .34) | |
| | | |
| MD Peak Load | .2 ± .02 (1.54 ± .17) | |
| | | |
| MD Elong | 427 ± 93 | |
| | | |
| CD TEA | 4.29 ± .15 (.83 ± .03) | |
| | | |
| CD Peak Load | .16 ± .01 (1.22 *±* .05) | |
| | | |
| CD Elong | 407 ± 17 | |

**TABLE 15**

| Example No. | Elongation @ 2000 g Load(%) | Load (g) 1st Pull to 30% Elongation | No. of Wraps of .2286mm (9 mil)Tape on Edges of Rubber Roll |
|---|---|---|---|
| | | | |
| 8 | 93 | 1277 | 0 |
| 9 | 92 | 1317 | 1 |
| 10 | 93 | 1291 | 2 |
| 11 | 96 | 1053 | 3 |
| 12 | 100 | 839 | 4 |

**TABLE 16**

| Example No. | Elongation @ 2000 g Load(%) | Load (g) 1st Pull to 30% Elongation | Gap Setting in mm (Mils) |
|---|---|---|---|
| | | | |
| 8 | 93 | 1277 | 0 (0) |
| 13 | 104 | 738 | .38 (15) |
| 14 | 108 | 646 | .63 (25) |

**TABLE 17**

| Example No. | Elongation @ 2000 g Load(%) | Load (g) 1st Pull to 30% Elongation | Gap Setting in mm (Mils) | Adhesion in Kg per cm² (Kg per 1 in²) |
|---|---|---|---|---|
| | | | | |
| 8 | 93 | 1277 | 0 (0) | - |
| 15 | 94 | 1027 | .254 (10) | 1.5 (9.7) |
| 16 | 98 | 750 | .483 (19) | 1.27 (8.2) |
| 17 | 102 | 637 | .635 (25) | 1.19 (7.7) |
| 18 | 101 | 761 | .762 (30) | 1.16 (7.5) |
| 19 | 105 | 610 | .889 (35) | 1.13 (7.3) |
| 20 | 104 | 677 | 1.016 (40) | 1.15 (7.4) |

**TABLE 18**

| Example No. | Load (g) 1st Pull to 30% Stretch | Load loss from Example 8 (percent) | Gap Setting in mm (Mils) |
|---|---|---|---|
| | | | |
| 8 | 1277 | - | 0 |
| 15 | 1027 | 19.6 | .254 (10) |
| 16 | 750 | 41.2 | .483 (19) |
| 17 | 637 | 50.1 | .635 (25) |
| 18 | 761 | 40.4 | .762 (30) |
| 19 | 610 | 52.2 | .889 (35) |
| 20 | 677 | 46.9 | 1.016 (40) |

## Claims

1. A method of producing a composite elastic necked bonded material comprising:
providing a tensioned, necked material;
providing a film of substantially molten elastomer;
depositing the elastomeric film onto the tensioned, necked material to form a multilayer material; and
applying pressure to the multilayer material to bond the tensioned, necked material to the elastomeric film,
utilizing a pressure roll arrangement comprising at least a first roll and second roll wherein said first and said second roll are arranged so that a controlled gap having a width of between 0.38 mm (15 mils) and 3.18 mm (125 mils) exists between said first roll and said second roll, said pressure roll arrangement applying pressure to the multilayer material to bond the tensioned, necked material to the elastomeric film.

2. The method of claim 1, wherein the gap between the pressure rollers is from 0.76 mm (30 Mils) to 2.55 mm (100 mils) and more preferably from 1.01 mm (40 mils) to 1.65 mm (65 mils).

3. The method of any of the preceding claims wherein said tensioned, necked material is continuously advancing.

4. The method of any of the preceding claims wherein said film of substantially molten elastomer is provided by extruding it through a die tip.

5. The method of any of the preceding claims wherein the film of elastomer is deposited onto the tensioned, necked material within from 0.25 to 0.5 seconds, preferably within from 0.3 to 0.45 seconds, of exiting the die tip.

6. The method of any of the preceding claims, wherein the film of elastomer is a film of an elastomeric block copolymer extruded at a temperature of from 182° to 283° C (360° to 540° F).

7. The method of any of the preceding claims, wherein the film of elastomer is extruded at temperature of from 199°C (390° F) to 249° C (480° F), preferably 204° C (400° F).

8. The method of any of the preceding claims, wherein the pressure applied to bond the necked material to the elastomeric film is generated by the tensioning of force on the tensioned, necked material as the elastomeric film is temporarily configured between a layer of tensioned, necked material and a protruding roller.

9. The method of any of the preceding claims, wherein the extruded elastomeric film is a film of pressure sensitive elastomer adhesive.

10. The method of claim 9, wherein the pressure sensitive elastomer adhesive is formed from a blend comprising an elastomeric polymer and a tackifying resin.

11. The method of any of the preceding claims, wherein the tensioned, necked material comprises at least two tensioned, necked materials, and wherein the step of providing said tensioned, necked material is performed by providing a first and second sheet, each sheet comprising at least one tensioned, necked material.

12. The method claim 11, wherein said first and second sheet is continuously advancing in intersecting relationship to form a contact zone.

13. The method of claim 12, wherein the film of substantially molten elastomer is provided between the first and second sheet of tensioned, necked material, and deposited onto the tensioned, necked material by depositing the elastomeric film into the contact zone between the tensioned, necked materials; and wherein pressure is applied to the multilayer material to bond each tensioned, necked material to the elastomeric film.

14. The method of claim 13, wherein the pressure applied to bond the necked material to the elastomeric film is generated by the tensioning force on the tensioned, necked materials as the multilayer material is passed over a protruding roll.

15. The method of claims 13 and 14, wherein the pressure is applied to the multilayer material immediately after forming the multilayer material.

16. The method of any of claim 11 to 15, wherein said first and second sheet is of at least one tensioned, necked material.

17. The method of any of claims 11 to 16, wherein the elastomer is extruded through a die tip between the first and second sheet of tensioned, necked material.

18. A method of producing a composite elastic necked-bonded material according to any one of the preceding claims, comprising:
providing a first and second continuously advancing sheet, each sheet comprising at least one tensioned, necked material and each sheet advancing in intersecting relationship to form a contact zone;
extruding a film of substantially molten elastomer through a die tip between the first and second continuously advancing sheet of tensioned, necked material so that the extruded elastomeric film is deposited into the contact zone between the tensioned, necked materials within from 0.1 to 1 second of exiting the die tip to form a multilayer material; and
immediately applying pressure to the multilayer material to bond each tensioned, necked material to the elastomeric film.

19. A method of producing a composite elastic necked-bonded material according to any one of the preceding claims, comprising:
providing a first and second continuously advancing sheet of at least one tensioned, necked material, each sheet comprising at least one tensioned, necked material, and each sheet advancing in intersecting relationship to form a contact zone;
extruding a film of substantially molten pressure sensitive elastomer adhesive through a die tip between the first and second continuously advancing sheet of tensioned, necked material so that the extruded pressure sensitive elastomer adhesive film is deposited into the contact zone between the tensioned, necked materials within from about 0.1 to about 1 second of exiting the die tip to form a mulitlayer material; and
immediately applying pressure to the mulitlayer material utilising a pressure roll arrangement comprising at least a first roll, a second roll and a controlled gap;
wherein the controlled gap between the first and second rolls of the pressure roll arrangement is set so that the force required to extend the resulting composite elastic material on the first pull is at least about 25 percent less than the force required to extend an identical composite elastic material prepared in an identical pressure roll arrangement with a pressurised nip such that the rolls are essentially in contact in the absence of material.

## Patentansprüche

1. Verfahren zur Herstellung eines elastischen, eingeschnürten, gebundenen Verbundmaterials, umfassend:
das Bereitstellen eines gespannten, eingeschnürten Materials;
das Bereitstellen eines Films aus im Wesentlichen geschmolzenem Elastomer;
das Aufbringen des elastomeren Films auf das gespannte, eingeschnürte Material, um ein Vielschichtmaterial zu bilden; und
das Ausüben von Druck auf das Vielschichtmaterial, um das gespannte, eingeschnürte Material mit dem elastomeren Film zu verbinden,
das Verwenden einer Druckwalzenanordnung umfassend wenigstens eine erste Walze und eine zweite Walze, wobei die erste und die zweite Walze angeordnet sind, so dass ein steuerbarer Spalt mit einer Breite zwischen 0,38 mm (15 mil) und 3,18 mm (125 mil) zwischen der ersten Walze und der zweiten Walze besteht, wobei die Druckwalzenanordnung auf das Vielschichtmaterial Druck ausübt, um das gespannte, eingeschnürte Material mit dem elastomeren Film zu verbinden.

2. Verfahren gemäß Anspruch 1, wobei der Spalt zwischen den Druckwalzen von 0,76 mm (30 mil) bis 2,55 mm (100 mil) und vorzugsweise von 1,01 mm (40 mil) bis 1,65 mm (65 mil) beträgt.

3. Verfahren gemäß einem der vorhergehenden Ansprüche, wobei das gespannte, eingeschnürte Material fortlaufend vorrückt.

4. Verfahren gemäß einem der vorhergehenden Ansprüche, wobei der Film des im Wesentlichen geschmolzenen Elastomers durch Extrudieren durch eine Düsenspitze bereitgestellt wird.

5. Verfahren gemäß einem der vorhergehenden Ansprüche, wobei der Film aus Elastomer innerhalb von 0,25 und 0,5 Sekunden, vorzugsweise innerhalb von 0,3 und 0,45 Sekunden nach Verlassen der Düsenspitze auf das gespannte, eingeschnürte Material aufgebracht wird.

6. Verfahren gemäß einem der vorhergehenden Ansprüche, wobei der Film aus Elastomer ein Film aus einem elastomeren Blockcopolymer ist, der bei einer Temperatur von 182°C bis 283°C (360° bis 540°F) extrudiert wurde.

7. Verfahren gemäß einem der vorhergehenden Ansprüche, wobei der Film aus Elastomer bei einer Temperatur von 199°C (390°F) bis 249°C (480°F), vorzugsweise 204°C (400°F) extrudiert wurde.

8. Verfahren gemäß einem der vorhergehenden Ansprüche, wobei der ausgeübte Druck zum Verbinden des eingeschnürten Materials mit dem elastomeren Film durch Ausüben einer Kraft auf das gespannte, eingeschnürte Material, wenn der elastomere Film zeitweise zwischen eine Lage eines gespannten, eingeschnürten Materials und einer hervorstehenden Walze angeordnet ist

9. Verfahren gemäß einem der vorhergehenden Ansprüche, wobei der extrudierte, elastomere Film ein Film eines druckempfindlichen, elastomeren Klebemittels ist.

10. Verfahren gemäß Anspruch 9, wobei das druckempfindliche, elastomere Klebemittel aus einer Mischung umfassend ein elastomeres Polymer und ein klebrigmachendes Harz gebildet wird.

11. Verfahren gemäß einem der vorhergehenden Ansprüche, wobei das gespannte, eingeschnürte Material wenigstens zwei gespannte, eingeschnürte Materialien umfasst, und wobei der Schritt des Bereitstellens des gespannten, eingeschnürten Materials durch Bereitstellen einer ersten und zweiten Schicht ausgeführt wird, wobei jede Schicht wenigstens ein gespanntes, eingeschnürtes Material umfasst.

12. Verfahren gemäß Anspruch 11, wobei die erste und zweite Schicht in überschneidendem Verhältnis fortlaufend vorrücken, um eine Kontaktzone zu bilden.

13. Verfahren gemäß Anspruch 12, wobei der Film aus im Wesentlichen geschmolzenem Elastomer zwischen der ersten und zweiten Schicht aus gespanntem, eingeschnürtem Material bereitgestellt ist, und wobei er auf das gespannte, eingeschnürte Material durch Aufbringen des elastomeren Films in die Kontaktzone zwischen den gespannten, eingeschnürten Materialien aufgebracht wird; und wobei Druck auf das Vielschichtmaterial ausgeübt wird, um jedes der gespannten, eingeschnürten Materialien an den elastomeren Film zu binden.

14. Verfahren gemäß Anspruch 13, wobei der ausgeübte Druck zum Binden des eingeschnürten Materials an dem elastomeren Film durch die Spannkraft der gespannten, eingeschnürten Materialien erzeugt wird, indem das Vielschichtmaterial über eine hervorstehende Walze geführt wird.

15. Verfahren gemäß Anspruch 13 oder 14, wobei der Druck auf das Vielschichtmaterial unmittelbar nach Bildung des Vielschichtmaterials ausgeübt wird.

16. Verfahren gemäß einem der Ansprüche 11 bis 15, wobei die erste und zweite Schicht aus wenigstens einem gespannten, eingeschnürten Material besteht.

17. Verfahren gemäß einem der Ansprüche 11 bis 16, wobei das Elastomer durch eine Düsenspitze zwischen der ersten und zweiten Schicht des gespannten, eingeschnürten Materials extrudiert wird.

18. Verfahren zur Herstellung eines elastischen, einschnürgebundenen Verbundmaterials gemäß einem der vorhergehenden Ansprüche, umfassend:
Bereitstellen einer ersten und zweiten fortlaufend vorrückenden Schicht, wobei jede Schicht wenigstens ein gespanntes, eingeschnürtes Material umfasst, und wobei jede Schicht in überschneidender Beziehung befördert wird, um eine Kontaktzone zu bilden;
Extrudieren eines Films aus im Wesentlichen geschmolzenem Elastomer durch eine Düsenspitze zwischen der ersten und zweiten fortlaufend vorrückenden Schicht aus gespanntem, eingeschnürtem Material, so dass der extrudierte, elastomere Film in eine Kontaktzone zwischen den gespannten, eingeschnürten Materialien innerhalb von 0,1 und 1 Sekunde nach Austritt aus der Düsenspitze eingebracht wird, um ein Vielschichtmaterial zu bilden; und
unmittelbares Ausüben von Druck auf das Vielschichtmaterial, um jedes der gespannten, eingeschnürten Materialien an den elastomeren Film zu binden.

19. Verfahren zur Herstellung eines elastischen, einschnürgebundenen Verbundmaterials gemäß einem der vorhergehenden Ansprüche, umfassend:
Bereitstellen einer ersten und zweiten fortlaufend vorrückenden Schicht aus wenigstens einem gespannten, eingeschnürten Material, wobei jede Schicht wenigstens ein gespanntes, eingeschnürtes Material umfasst, und wobei jede Schicht in überschneidender Beziehung befördert wird, um eine Kontaktzone zu bilden;
Extrudieren eines Films aus einem im Wesentlichen geschmolzenem, druckempfindlichem Elastomerklebemittel durch eine Düsenspitze zwischen einer ersten und zweiten fortlaufend vorrückenden Schicht eines gespannten, eingeschnürten Materials, so dass der extrudierte, druckempfindliche Elastomerklebemittelfilm in die Kontaktzone zwischen den gespannten, eingeschnürten Materialien innerhalb von etwa 0,1 und etwa 1 Sekunde nach Austritt aus der Düsenspitze eingebracht wird, um ein Vielschichtmaterial zu bilden; und
unmittelbares Ausüben von Druck auf das Vielschichtmaterial durch Verwendung einer Druckwalzenanordnung umfassend wenigstens eine erste Walze, eine zweite Walze und einen gesteuerten Spalt;
wobei der gesteuerte Spalt zwischen der ersten und der zweiten Walze der Druckwalzenanordnung so eingestellt ist, dass die benötigte Kraft zum Ausdehnen des resultierenden elastischen Verbundmaterials bei dem ersten Zug wenigstens etwa 25 Prozent weniger beträgt als die benötigte Kraft zum Ausdehnen eines identischen elastischen Verbundmaterials, welches in einer identischen Druckwalzenanordnung mit einem unter Druck gesetzten Walzenspalt hergestellt wird, so dass die Walzen im Wesentlichen in Abwesenheit des Materials in Kontakt stehen.

## Revendications

1. Procédé de production d'un matériau composite élastique, lié alors qu'il est à l'état rétréci, comprenant :
la fourniture d'un matériau rétréci ;
la fourniture d'un film d'un élastomère sensiblément fondu ;
le dépôt du film d'élastomère sur le matériau rétréci, pour former un matériau multicouche ; et
l'application de pression au matériau multicouche pour lier le matériau rétréci au film élastomère,
l'utilisation d'une disposition à rouleaux presseurs comprenant au moins un premier rouleau et un second rouleau, le premier et le second rouleaux étant disposés de telle sorte qu'existe entre eux un espace maîtrisé ayant une largeur comprise entre 0,38 mm (15 millièmes de pouce) et 3,18 mm (125 millièmes de pouce), ladite disposition à rouleaux presseurs appliquant une pression audit matériau multicouche pour lier le matériau rétréci au film élastomère.

2. Procédé selon la revendication 1, dans lequel l'espace entre les rouleaux presseurs est compris entre 0,76 mm (30 millièmes de pouce) et 2,55 mm (100 millièmes de pouce) et, de préférence, entre 1,01 mm (40 millièmes de pouce) et 1,65 mm (65 millièmes de pouce).

3. Procédé selon l'une quelconque des revendications précédentes, dans lequel ledit matériau rétréci avance en continu.

4. Procédé selon l'une quelconque des revendications précédentes, dans lequel ledit film d'élastomère sensiblement fondu est fourni par extrusion au travers d'une pointe de filière.

5. Procédé selon l'une quelconque des revendications précédentes, dans lequel le film d'élastomère est déposé sur le matériau rétréci, dans les 0,25 à 0,5 seconde, de préférence dans les 0,3 à 0,45 seconde, suivant la sortie de la pointe de filière.

6. Procédé selon l'une quelconque des revendications précédentes, dans lequel le film d'élastomère est un film d'un copolymère séquencé élastomère extrudé à une température comprise entre 182° et 283°C (entre 360° et 540°F).

7. Procédé selon l'une quelconque des revendications précédentes, dans lequel le film d'élastomère est extrudé à une température comprise entre 199°C (390°F) et 249°C (480°F), de préférence à 204°C (400°F).

8. Procédé selon l'une quelconque des revendications précédentes, dans lequel la pression appliquée pour lier le matériau rétréci au film élastomère est générée par l'application d'une force de traction sur le matériau rétréci, tandis que le film élastomère est temporairement configuré entre une couche de matériau rétréci et un rouleau protubérant.

9. Procédé selon l'une quelconque des revendications précédentes, dans lequel le film d'élastomère extrudé est un film d'adhésif élastomère sensible à la pression.

10. Procédé selon la revendication 9, dans lequel l'adhésif d'élastomère sensible à la pression est formé à partir d'un mélange comprenant un polymère élastomère et une résine poissante.

11. Procédé selon l'une quelconque des revendications précédentes, dans lequel le matériau rétréci comprend au moins deux matériaux rétrécis, et dans lequel l'étape de fourniture dudit matériau rétréci est mise en oeuvre en fournissant une première et une seconde feuilles, chaque feuille comprenant au moins un matériau rétréci.

12. Procédé selon la revendication 11, dans lequel lesdites première et seconde feuilles avancent en continu selon une relation sécante pour former une zone de contact.

13. Procédé selon la revendication 12, dans lequel le film d'élastomère sensiblement fondu est fourni entre les première et seconde feuilles de matériau rétréci, et déposé sur le matériau rétréci par dépôt du film d'élastomère dans la zone de contact entre les matériaux rétrécis ; et dans lequel la pression est appliquée au matériau multicouche pour lier chaque matériau rétréci au film d'élastomère.

14. Procédé selon la revendication 13, dans lequel la pression appliquée pour lier le matériau rétréci au film d'élastomère est générée par la force de traction appliquée sur les matériaux rétrécis, tandis que le matériau multicouche passe sur un rouleau protubérant.

15. Procédé selon les revendications 13 et 14, dans lequel la pression est appliquée au matériau multicouche immédiatement après la formation du matériau multicouche.

16. Procédé selon l'une quelconque des revendications 11 à 15, dans lequel lesdites première et seconde feuilles sont faites d'au moins un matériau rétréci.

17. Procédé selon l'une quelconque des revendications 11 à 16, dans lequel l'élastomère est extrudé au travers d'une pointe de filière entre les première et seconde feuilles de matériau rétréci.

18. Procédé de production d'un matériau composite élastique lié à l'état rétréci selon l'une quelconque des revendications précédentes comprenant :
la fourniture d'une première et d'une seconde feuilles avançant en continu, chaque feuille comprenant au moins un matériau rétréci, et chaque feuille avançant selon une relation sécante pour former une zone de contact ;
l'extrusion d'un film d'un élastomère sensiblement fondu au travers d'une pointe de filière entre les première et seconde feuilles avançant en continu de matériau rétréci, de telle sorte que le film élastomère extrudé soit déposé dans la zone de contact entre les matériaux rétréci, dans les 0,1 à 1 seconde suivant la sortie de la pointe de filière pour former un matériau multicouche ; et
l'application immédiate de pression au matériau multicouche pour lier chaque matériau rétréci au film d'élastomère.

19. Procédé de production d'un matériau composite élastique lié à l'état rétréci selon l'une quelconque des revendications précédentes, comprenant :
la fourniture d'une première et d'une seconde feuilles avançant en continu d'au moins un matériau rétréci, chaque feuille comprenant au moins un matériau rétréci, et chaque feuille avançant selon une relation sécante pour former une zone de contact ;
l'extrusion d'un film d'adhésif sensible à la pression en un élastomère sensiblement fondu au travers d'une pointe de filière entre la première et la seconde feuilles avançant en continu de matériau rétréci, de telle sorte que le film d'adhésif sensible à la pression, formé d'élastomère extrudé, soit déposé dans la zone de contact entre les matériaux rétrécis, approximativement dans les 0,1 à 1 seconde suivant la sortie de la pointe de filière pour former un matériau multicouche ; et
l'application immédiate d'une pression au matériau multicouche en utilisant une disposition à rouleaux presseurs comprenant au moins un premier rouleau, un second rouleau et un espace maîtrisé ;
l'espace maîtrisé entre les premier et second rouleaux de la disposition à rouleaux presseurs étant réglé de telle sorte que la force requise pour dilater le matériau élastique composite résultant lors de la première traction est d'au moins environ 25 % inférieure à la force requise pour dilater un matériau élastique composite identique préparé dans une disposition à rouleaux presseurs identique ayant un espace de pression tel que les rouleaux sont essentiellement en contact en l'absence du matériau.
